(19) Europäisches Patentamt / European Patent Office / Office européen des brevets

(11) **EP 2 451 106 B1**

(12) **EUROPEAN PATENT SPECIFICATION**

(45) Date of publication and mention
of the grant of the patent:
**20.02.2019 Bulletin 2019/08**

(21) Application number: **10793862.3**

(22) Date of filing: **01.07.2010**

(51) Int Cl.:
*H04B 7/0452* (2017.01)  *H04J 99/00* (2009.01)
*H04W 16/28* (2009.01)  *H04J 1/00* (2006.01)
*H04J 11/00* (2006.01)  *H04B 7/04* (2017.01)
*H04L 1/00* (2006.01)  *H04L 25/02* (2006.01)
*H04L 5/00* (2006.01)  *H04L 25/03* (2006.01)

(86) International application number:
**PCT/JP2010/004345**

(87) International publication number:
**WO 2011/001690 (06.01.2011 Gazette 2011/01)**

(54) **WIRELESS COMMUNICATION DEVICE AND WIRELESS COMMUNICATION METHOD**

DRAHTLOSE KOMMUNIKATIONSVORRICHTUNG UND
DRAHTLOSKOMMUNIKATIONSVERFAHREN

DISPOSITIF ET PROCÉDÉ DE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **03.07.2009 JP 2009159207**

(43) Date of publication of application:
**09.05.2012 Bulletin 2012/19**

(73) Proprietor: **Panasonic Intellectual Property
Corporation
of America
Torrance, CA 90503 (US)**

(72) Inventor: **KISHIGAMI, Takaaki
Osaka 540-6207 (JP)**

(74) Representative: **Grünecker Patent- und
Rechtsanwälte
PartG mbB
Leopoldstraße 4
80802 München (DE)**

(56) References cited:
WO-A1-2008/131352  WO-A2-2010/080632
JP-A- 2009 165 125  JP-A- 2009 182 966

• AMIR KHOJASTEPOUR ET AL: "Text proposal on
DL MAP ; C80216m-09_1017", IEEE DRAFT;
C80216M-09_1017, IEEE-SA, PISCATAWAY, NJ
USA, vol. 802.16m, 27 April 2009 (2009-04-27),
pages 1-6, XP017797878, [retrieved on
2009-04-28]
• NEC GROUP: "MU-MIMO: Demodulation at the
Mobile Station", 3GPP DRAFT; R1-090649, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, no. Athens, Greece; 20090203,
3 February 2009 (2009-02-03), XP050318526,
[retrieved on 2009-02-03]
• TAKAAKI KISHIGAMI ET AL: "Proposed text for
DL A-MAP IE for MU-MIMO mode in IEEE802.16m
Amendment ; C80216m-09_1224", IEEE DRAFT;
C80216M-09_1224, IEEE-SA, PISCATAWAY, NJ
USA, vol. 802.16m, 6 July 2009 (2009-07-06),
pages 1-7, XP068001819, [retrieved on
2009-07-07]
• 3GPP TSG-RAN WG1 #56 R1-090649 13 February
2009, XP050318526
• 3GPP TSG-RAN WG1 #58BIS R1-093878 16
October 2009, XP050388382

## Description

Technical Field

The present invention relates to a wireless communication device and a wireless communication method which use a multiuser-MIMO technique.

Background Art

Recently, demands for a large capacity and speed-up of wireless communication have been increased, and researches on methods of improving the utilization factor of finite frequency resources have been vigorously conducted. As one of the methods, attention is focused on a technique of using a spatial domain.

In a MIMO technique (Multiple Input Multiple Output), each of a transmitter and a receiver is provided with a plurality of antenna elements, and spatial multiplexing transmission is realized in a propagation environment where the reception signal correlation between the antennas is low (see Non-patent Literature 1). In this case, the transmitter transmits different data sequence by using a physical channel at the identical time, at the same frequency, and of the same coding for each antenna element, from a plurality of accompanying antennas. The receiver separates the reception signal and receives the different data sequence through a plurality of accompanying antennas. In this way, since a plurality of spatial multiplexing channels are used, it becomes possible to accomplish speed-up without using a multi-level modulation. In an environment where a large number of scatters exist between the transmitter and the receiver under conditions of a sufficient S/N (signal-to-noise ratio), when the transmitter and the receiver include the same number of antennas, the communication capacity can be expanded in proportion to the number of the antennas.

As another MIMO technique, known is a multiuser-MIMO technique (multiuser-MIMO or MU-MIMO). The MU-MIMO technique is already discussed in Standards for a next-generation wireless communication system. In a draft of 3GPP-LTE standard or IEEE 802.16m standard, for example, a transmission method by the multiuser-MIMO is included in standardization (see Non-patent Literature 2 and Non-patent Literature 3).

Here, as a conventional example, a frame format which is discussed in draft IEEE 802.16m standard (hereinafter, referred to as 16m), and the configurations of a base station apparatus 80 and a terminal apparatus 90 which perform MU-MIMO transmission will be described with reference to Figs. 19, 20, and 21. Fig. 19 shows the frame format in the downlink in the conventional example. Fig. 20 shows an example of MU-MIMO assignment information with respect to an n-th terminal apparatus MS#n in the conventional example. Fig. 21 schematically shows the configurations of the base station apparatus and the terminal apparatus which perform MU-MIMO transmission in the downlink, based on the configuration of the conventional example.

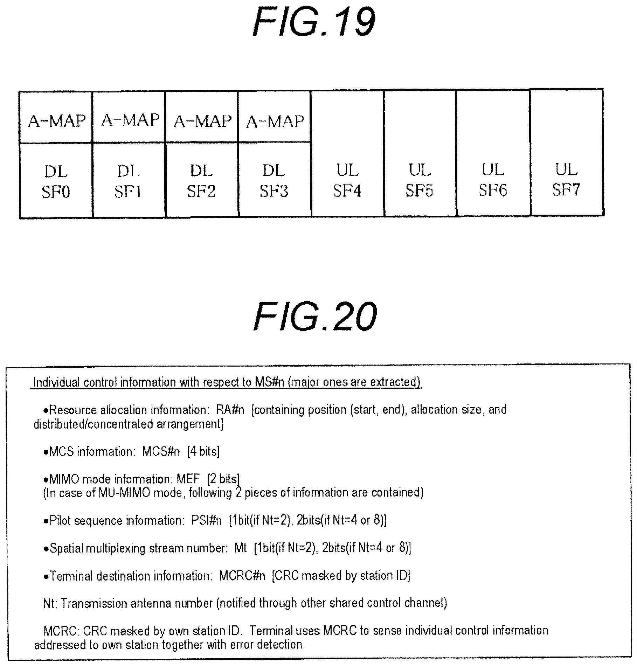

In the conventional example, in the downlink (DownLink: DL), when the base station apparatus 80 transmits data of an individual terminal (or individual user) in an individual data region (in the figure, DL), the base station apparatus 80 transmits a downlink transmission signal in which a notification of terminal assignment information is contained to the terminal apparatus 90 in an area. Here, in the 16m, as shown in the frame format in Fig. 19, terminal assignment information is contained in a control information region which is allocated as A-MAP. In Fig. 19, SF indicates Subframe, and UL indicates UpLink (UL). In the following description, an n-th terminal apparatus 90 is referred to as the terminal MS#n.

Fig. 20 shows examples of main parameters contained in control information (individual control information) to a specific terminal MS#n in the conventional example. Resource assignment information RA#n contains information related to the position, allocation size, and distributed/centralized arrangement of the transmission region of individual user data to the terminal MS#n in the individual data region (in Fig. 19, DL) to be transmitted by using an OFDM symbol that is subsequent to the A-MAP. In MIMO mode information MEF, transmission information such as spatial multiplexing mode or the spatio-temporal diversity transmission mode is transmitted. When the MIMO mode information MEF indicates a MU-MIMO mode, the information further contains pilot sequence information PSI#n and the number Mt of whole spatial multiplexing streams in the MU-MIMO. MCS information (MSC#n) notifies of the modulation multi-level number and coding rate information of a spatial stream to the terminal apparatus MS#n. Terminal destination information (MCRC#n) is CRC information masked by terminal identification information ID (connection ID) which is allocated in connection establishment by the base station apparatus 80. In this way, the terminal apparatus MS#n performs error detection and senses individual control information addressed to the own station. In Fig. 20, Nt indicates the number of transmission antennas (notified through another shared control channel).

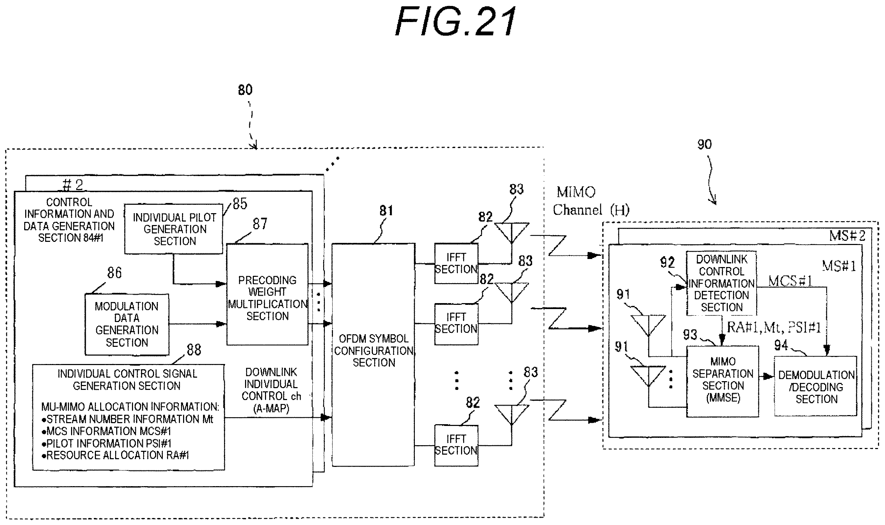

Referring to Fig. 21, the base station apparatus 80 (BS#n: n is a natural number) operates in the following manner. In advance of MU-MIMO transmission, the base station apparatus 80 notifies individual terminals of MU-MIMO assignment information by using the control information region which is allocated as A-MAP.

As shown in Fig. 20, as parameters which are necessary in a reception process on the side of the terminal apparatus MS#n (n: a natural number), the MU-MIMO assignment information contains the spatial multiplexing stream number (Mt), the coding rate and modulation information MCS#n of an error correction code which is applied to the spatial multiplexing stream addressed to MS#n, the pilot sequence information (PSI#n) addressed to MS#n, and the resource assignment information RA#n addressed to MS#n. Here, n = 1, ..., Mt, and it is assumed that one spatial stream is allocated to the terminal apparatus.

A control information and data generation section 84#n (n: a natural number) includes an individual pilot generation section 85, a modulation data generation section 86, a precoding weight multiplication section 87, and an individual control signal generation section 88. The control information and data generation section 84#n generates individual control information and data to the terminal apparatus MS#n.

Here, the individual control signal generation section 88 generates an individual control signal containing the above-described MU-MIMO assignment information. The modulation data generation section 86 generates a modulation data signal #n addressed to the terminal apparatus MS#n which performs spatial multiplexing transmission, based on the coding rate and modulation information MCS#n. The individual pilot generation section 85 generates a pilot signal #n which is used in channel estimation, based on the pilot information (PSI #n) addressed to MS#n. The precoding weight multiplication section 87 multiplies the modulation data signal #n with the pilot signal #n by using a common Precoding weight #n, thereby producing spatial streams. A number (Mt) of the spatial multiplexing streams are generated by the control information and data generation section 84#1, ..., #Mt.

An OFDM symbol configuration section 81 allocates the individual control information to an A-MAP control information region on an OFDM symbol. Furthermore, the spatial streams which are individual data addressed to an Mt number of terminal apparatuses are mapped to a resource based on the resource assignment information RA#n, by using spatial multiplexing. IFFT sections 82 perform OFDMA modulation, addition of Cyclic Prefiex, and frequency conversion on outputs of the OFDM symbol configuration section 81. Then, the outputs of the OFDM symbol configuration section 81 which have been processed by the IFFT sections 82 are transmitted through antennas 83, respectively.

In this case, with respect to a MIMO propagation channel which has been precoded, channel estimation can be performed by using the pilot signal which has been precoded by the same precoding weight as that of the data signal. Therefore, precoding information is unnecessary in MU-MIMO mode information.

As the pilot signals, signals which are orthogonal to each other among spatial multiplexing streams by using frequency division are employed, thereby enabling estimation of a MIMO propagation channel in the terminal apparatus 90 to be performed.

By contrast, the terminal apparatus MS#1 performs the following terminal reception process. First, in the terminal apparatus MS#1, a downlink control information detection section 92 detects MU-MIMO assignment information addressed to the own apparatus from a downlink individual control signal which is received through antennas 91. Then, the terminal apparatus MS#1 extracts data in a region which is resource-allocated to the MU-MIMO transmission, from not-shown data which have been undergone OFDMA demodulation.

Next, a MIMO separation section 93 performs channel estimation of a MIMO propagation channel by using the precoded pilot signals in the number corresponding to the spatial multiplexing stream number (Mt). Furthermore, the MIMO separation section 93 generates a reception weight based on MMSE criterion, in accordance with a result of the estimation of a MIMO propagation channel and the pilot information (PSI) addressed to the own apparatus, and separates a stream addressed to the own apparatus from data which are spatially multiplexed, and arranged in the resource-allocated region. With respect to the separated stream addressed to the own apparatus, then, a demodulation/decoding section 94 performs a demodulation process and a decoding process by using the MCS information.

In the individual control information shown in Fig. 20, however, "modulation information (for example, QPSK, 16QAM, and the like)" of spatial streams which are simultaneously spatially multiplexed, and which are addressed to other users is not contained. In such a case, in the terminal apparatus 90, it is impossible to apply maximum likelihood detection (MLD) reception in which a high reception quality is obtained. This is because of the following reason.

Namely, as disclosed in Non-patent Literature 4, in MLD reception, a replica is generated by using a channel estimation value H of the MIMO propagation channel and a transmission signal candidate Sm, and a signal candidate which minimizes the Euclidian distance with a reception signal r is decided as a transmission signal. In the transmission signal candidate Sm in the generation of the replica, however, not only modulation information of the spatial stream addressed to the own apparatus, but also that of the spatial streams addressed to other users are necessary.

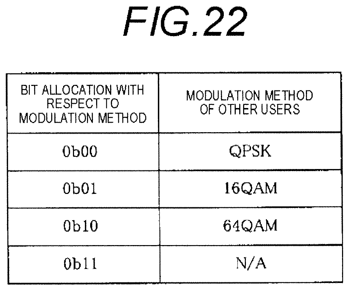

On the other hand, a proposal in which individual control information contains modulation information of other users has been made. Non-patent Literature 5 proposes that other-user modulation information is set as individual control information. Fig. 22 is a table showing an example of modulation information of other users contained in individual control information. In the figure, the right column indicates the modulation method of other users, and the left column indicates bit allocation with respect to the modulation method. In Non-patent Literature 5, as shown in Fig. 22, a base station apparatus notifies one terminal apparatus by using 2 bits per one other user. According to the configuration, when multiuser-MIMO transmission is to be performed, MLD reception can be applied to a reception process in a terminal apparatus, and hence the reception quality of a terminal apparatus can be improved.

Citation List

Non-Patent Literature

Non-patent Literature 1: G. J. Foschini, "Layered space-time architecture for wireless communication in a fading environment when using multi-element antennas", Bell Labs Tech. J, Autumn, 1996, p. 41-59

Non-patent Literature 2: 3GPP TS36.211 V8.3.0 (2008-05)

Non-patent Literature 3: IEEE 802.16m-09/0010r2, "Air Interface for Fixed and Mobile Broadband Wireless Access Systems: Advanced Air Interface (working document)"

Non-patent Literature 4: Tokkyocho Hyoujun Gijutsushu (MIMO Kanren Gijutsu) https://www.jpo.go.jp/shiryou/s_sonota/hyoujun_gijutsu/mimo/mokuji.htm

Non-patent Literature 5: IEEE C802.16m-09/1017, "Text proposal on DL MAP", Amir Khojastepour, Narayan Prasad, Sampath Rangarajan, Nader Zein, Tetsu Ikeda, Andreas Maeder (2009-04-27)

Summary of the Invention

Technical Problems

As shown in Fig. 22, in the case where a base station apparatus notifies one terminal apparatus of terminal assignment information in MU-MIMO, the base station apparatus must perform the notification with adding other-user modulation information, for each of users (each terminal) which perform spatial multiplexing. As the number of users which perform spatial multiplexing is larger, therefore, the information amount which is required in the notification of the terminal assignment information is further increased, and the overhead in data transmission becomes more enlarged, thereby causing a problem in that the data transmission efficiency is degraded. In the case where notification is performed by using 2 bits per one other user, for example, in multiuser-MIMO transmission for four users, the increased amount [total of the four users] of individual control channels is 24 bits (= MDF (2 bits/user) × 3 users [number of the other users] × 4-user multiplexing).

Moreover, in the case where multiuser-MIMO transmission is performed a plurality of times in the individual data region, a plurality of above-described notifications of the terminal assignment information for the multiuser-MIMO are necessary, and therefore there arises a problem in that the overhead is further enlarged. In the case where multiuser-MIMO transmission for four users is performed N times, for example, (24 × N) bits are required.

It is an object of the invention to provide a wireless communication device and a wireless communication method in which, in a downlink individual control channel in a multiuser-MIMO mode, the overhead of notifications of other-user modulation information can be reduced.

Solution to Problems

The invention is defined by the subject matter of the independent claims. Preferred embodiments are claimed in the dependent claims.

According to an example for understanding the background of the present invention, there is disclosed a wireless communication device, including: a pilot sequence allocation section which is configured to allocate pilot sequence numbers that are used in spatial multiplexing streams, based on modulation information of the spatial multiplexing streams with respect to a plurality of counterparty wireless communication devices that perform multiuser-MIMO transmission; a first modulation information generation section which is configured to generate modulation information and pilot sequence allocation number information that are related to a first spatial multiplexing stream addressed to a first counterparty wireless communication device of the plurality of counterparty wireless communication devices; and a second modulation information generation section which is configured to generate modulation information related to spatial multiplexing streams addressed to other counterparty wireless communication devices excluding the first counterparty wireless communication device, in order of pilot sequence numbers allocated to the spatial multiplexing streams addressed to the other counterparty wireless communication devices excluding the first counterparty wireless communication device, wherein the wireless communication device is configured to notify the first counterparty wireless communication device of the modulation information and the pilot sequence allocation number information which are generated by the first modulation information generation section and the second modulation information generation section.

In the wireless communication device, the pilot sequence allocation section is configured to allocate the pilot sequence numbers in ascending or descending order of a modulation multi-level number of a modulation scheme contained in the modulation information of the spatial multiplexing streams with respect to the plurality of counterparty wireless communication devices.

In the wireless communication device, the second modulation information generation section is configured to generate other-user modulation information in which a kind of a modulation scheme and a number of streams using the modulation scheme are represented by bits, the kind and the number being contained in the modulation information related to the spatial multiplexing streams addressed to the other counterparty wireless communication devices excluding the first counterparty wireless communication device.

In the wireless communication device, the second modulation information generation section is configured to generate second modulation information in which modulation schemes are arranged in ascending or descending order of a modulation multi-level number and represented by bits, the modulation schemes being contained in the modulation information related to the spatial multiplexing streams addressed to the other counterparty wireless communication devices excluding the first counterparty wireless communication device.

In the wireless communication device, the second modulation information generation section is configured to exclude, from the second modulation information, other-user modulation information, in which a number of the modulation scheme corresponding to a predetermined modulation multi-level number is equal to or larger than a predetermined number.

The disclosure also provides a wireless communication device, including: an own-user modulation information extraction section which is configured to extract modulation information and information of a pilot sequence allocation number that are related to a spatial multiplexing stream addressed to the wireless communication device from a counterparty wireless communication device that performs multiuser-MIMO transmission; an other-user modulation information extraction section which is configured to extract other-user modulation information related to other spatial multiplexing streams excluding one addressed to the own station; a channel estimation section which is configured to perform channel estimation of a MIMO propagation channel, based on outputs of the own-user modulation information extraction section and the other-user modulation information extraction section; and an MLD reception process section which is configured to perform an MLD reception process on multiuser-MIMO-transmitted spatial multiplexing streams, based on the control information and a result of the channel estimation by the channel estimation section, wherein the MLD reception process section is configured to perform the MLD reception process, based on the own-user modulation information, the other-user modulation information, and the pilot sequence allocation number which is allocated in ascending or descending order of a modulation multi-level number of the modulation scheme.

The disclosure also provides a wireless communication method in a wireless communication device, including: allocating pilot sequence numbers that are used in spatial multiplexing streams, based on modulation information of the spatial multiplexing streams with respect to a plurality of counterparty wireless communication devices that perform multiuser-MIMO transmission; generating first modulation information and pilot sequence allocation number information that are related to a first spatial multiplexing stream addressed to a first counterparty wireless communication device of the plurality of counterparty wireless communication devices; generating second modulation information related to spatial multiplexing streams addressed to other counterparty wireless communication devices excluding the first counterparty wireless communication device in order of pilot sequence numbers allocated to spatial multiplexing streams addressed to the other counterparty wireless communication devices excluding the first counterparty wireless communication device; and notifying the first counterparty wireless communication device of the first modulation information, the second modulation information and the pilot sequence allocation number information.

The disclosure also provides a wireless communication method in a wireless communication device, including: extracting own-station modulation information and information of a pilot sequence allocation number that are related to a spatial multiplexing stream addressed to the wireless communication device from a counterparty wireless communication device that performs multiuser-MIMO transmission; extracting other-user modulation information related to other spatial multiplexing streams excluding one addressed to the own station; performing channel estimation of a MIMO propagation channel, based on the own-station modulation information and the other-user modulation information; and, on a basis of a result of the channel estimation, performing MLD reception process on multiuser-MIMO-transmitted spatial multiplexing streams, based on the own-user modulation information, the other-user modulation information, and the pilot sequence allocation number which is allocated in ascending or descending order of a modulation multi-level number of the modulation scheme.

Advantageous Effects of the Invention

According to the wireless communication device and the wireless communication method of the invention, the overhead of notifications of other-user modulation information contained in an individual control in a multiuser-MIMO mode can be reduced.

Brief Description of the Drawings

In the following an Embodiment of the invention and a Related Example useful for understanding the background of the invention are numerated together.

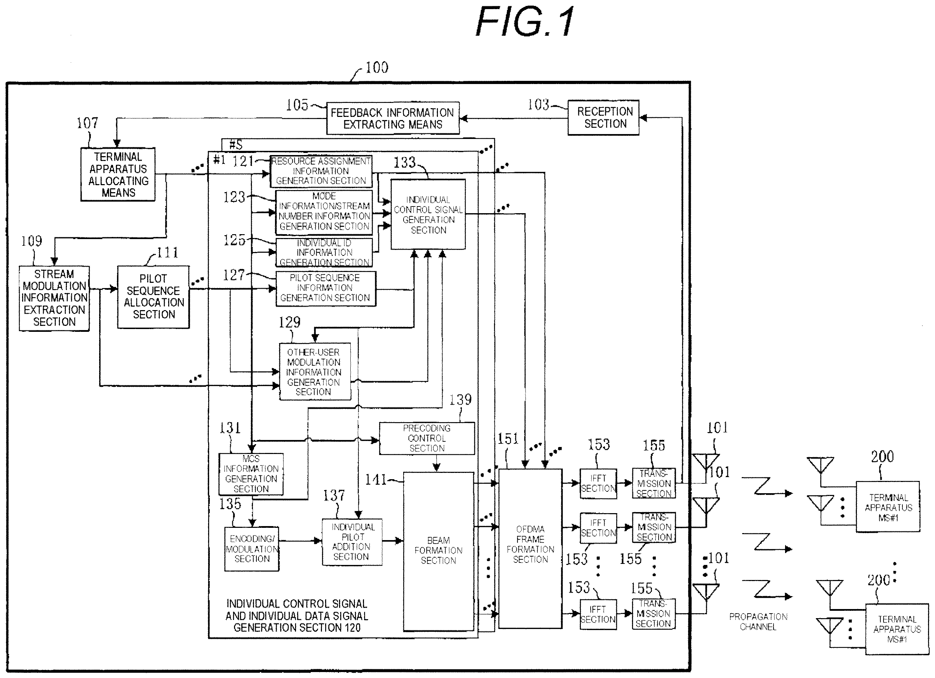

Fig. 1 is a block diagram showing the configuration of a base station apparatus 100 in Embodiment 1.

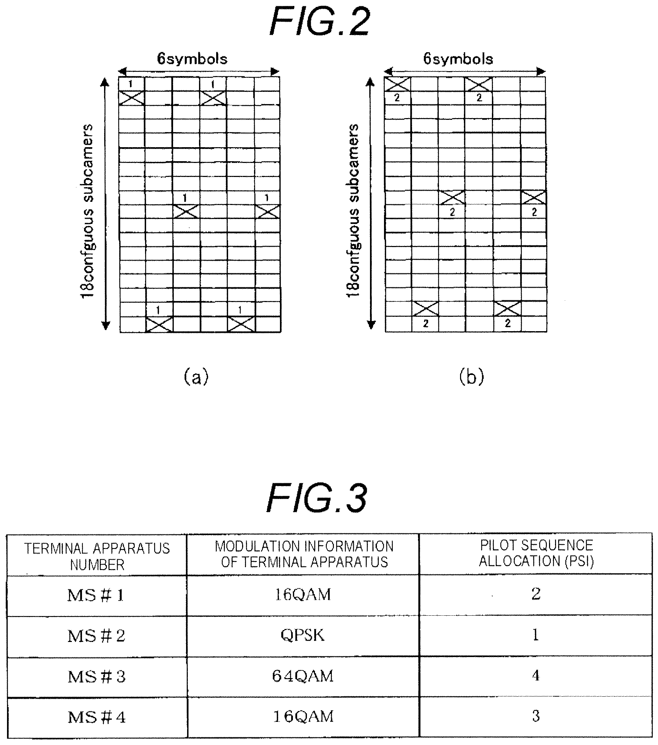

Figs. 2(a) and 2(b) are diagrams showing an example of pilot sequence allocation and data sequence allocation in 2 streams.
Fig. 3 is a table showing correspondence between modulation information and pilot sequence (PSI) allocation of each terminal apparatus.

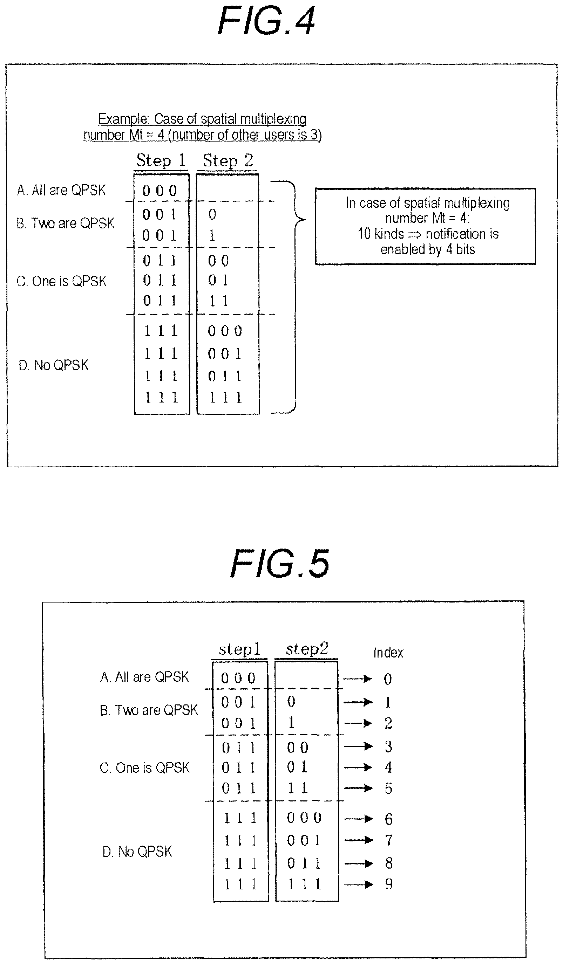

Fig. 4 is a diagram showing Example 1 of association between other-user modulation information and PSI allocation.

Fig. 5 is a diagram showing Example 2 of association between other-user modulation information and PSI allocation.

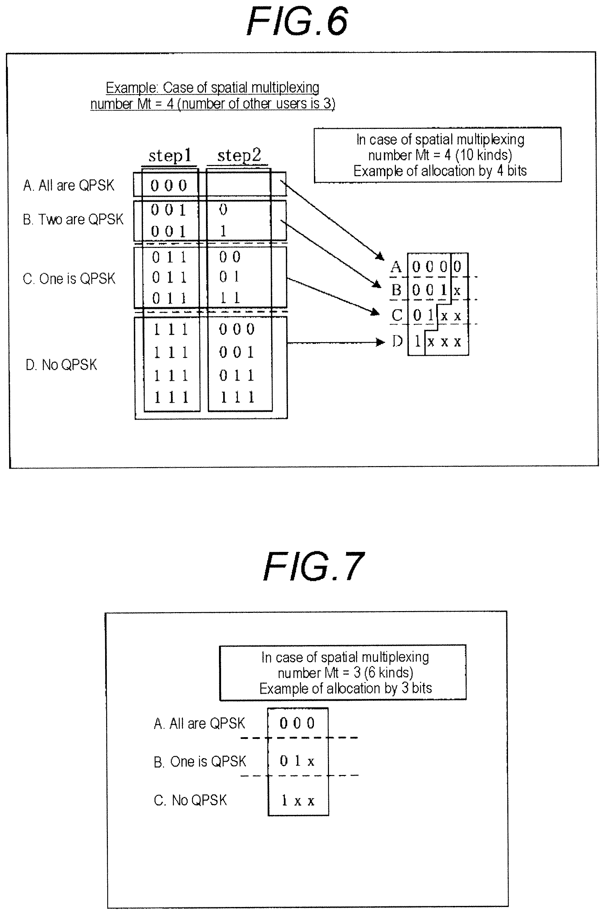

Fig. 6 is a diagram showing Example 3 of association between other-user modulation information and PSI allocation.

Fig. 7 is a diagram showing Example 4 of association between other-user modulation information and PSI allocation.

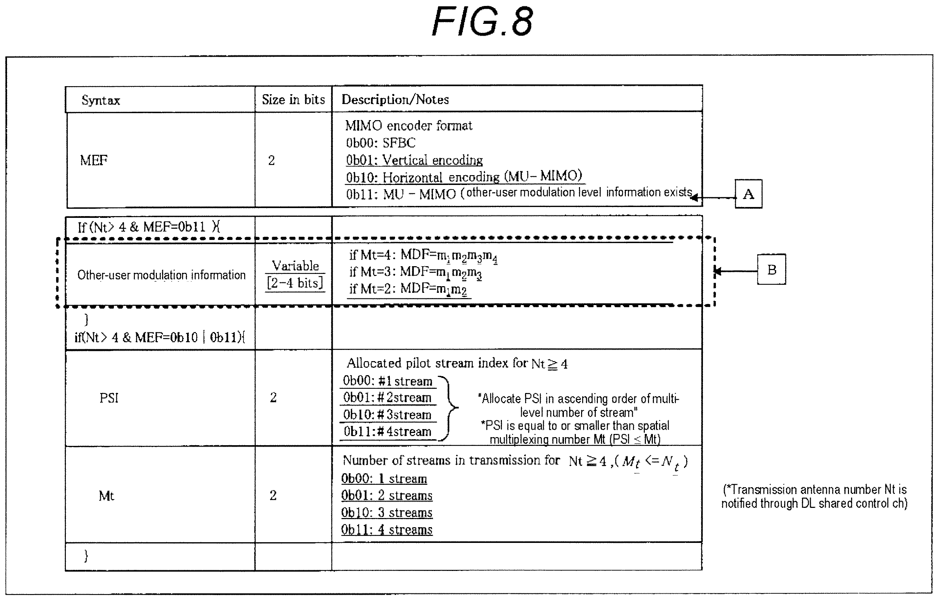

Fig. 8 is a diagram showing an example of individual control information generated by an individual control signal generation section 133.

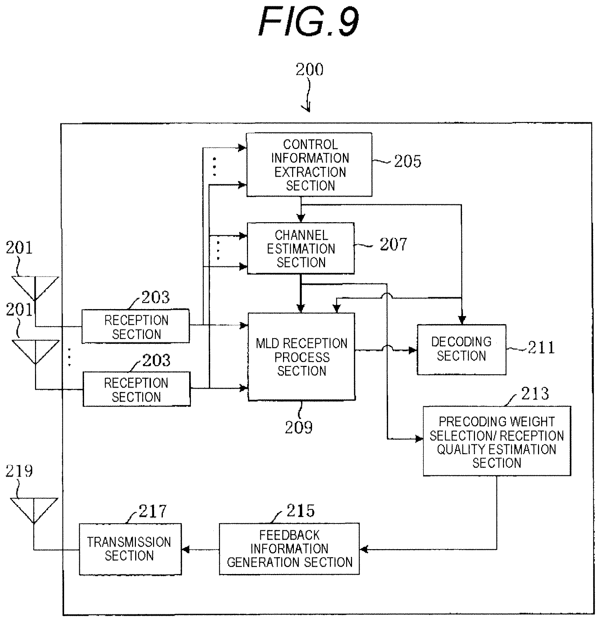

Fig. 9 is a block diagram showing the configuration of a terminal apparatus 200 in Embodiment 1.

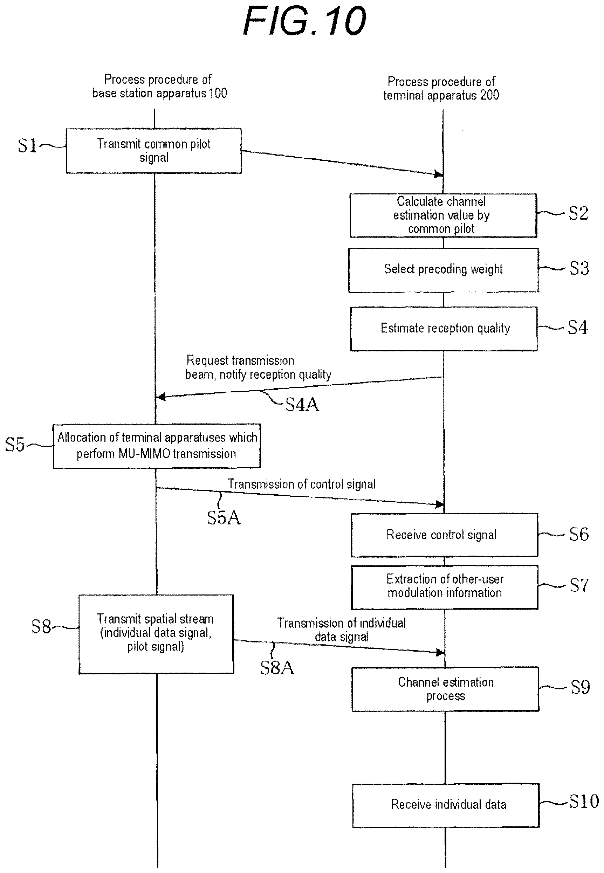

Fig. 10 is a diagram showing a process procedure between the base station apparatus 100 and the terminal apparatus 200.

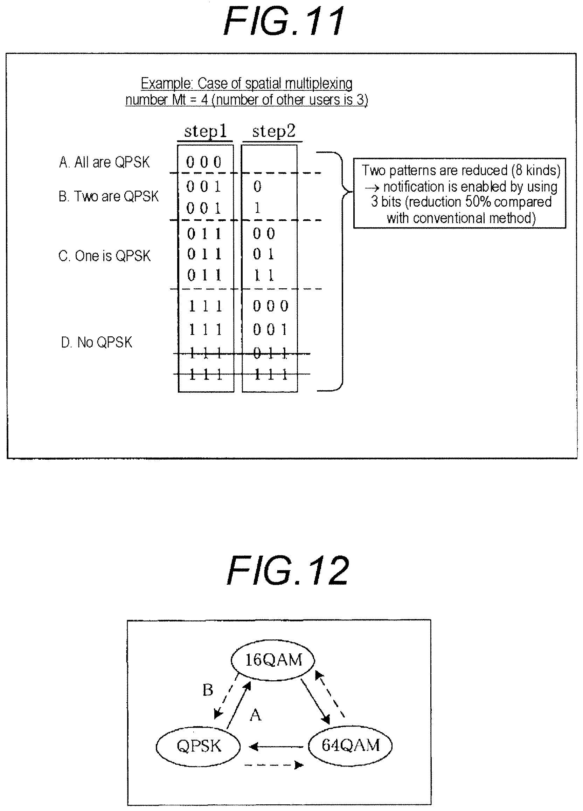

Fig. 11 is a diagram showing combinations of exclusions in combination numbers of modulation information of other users.

Fig. 12 is a diagram showing an example of a method of allocating PSI in a pilot sequence allocation section 111.

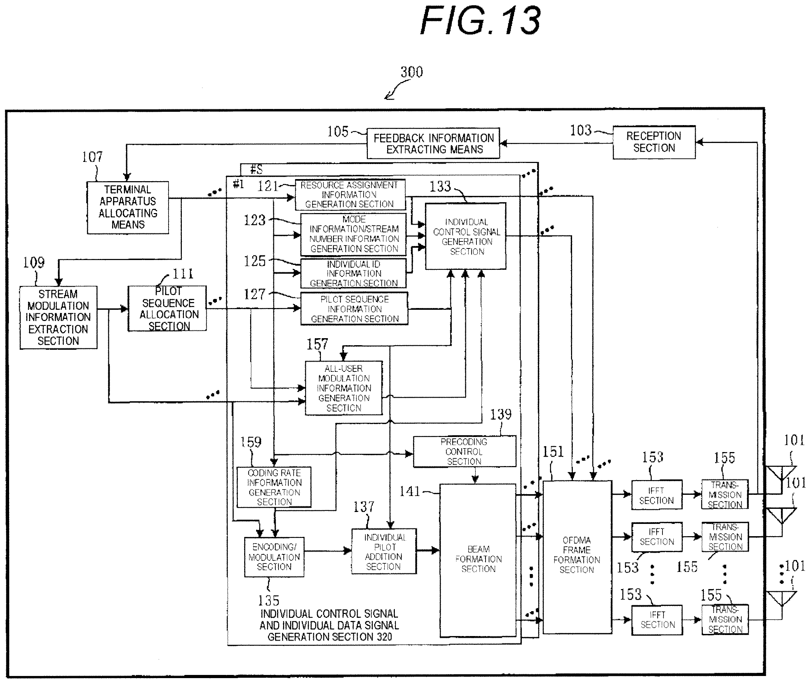

Fig. 13 is a block diagram showing another configuration of the base station apparatus 100 in Embodiment 1.

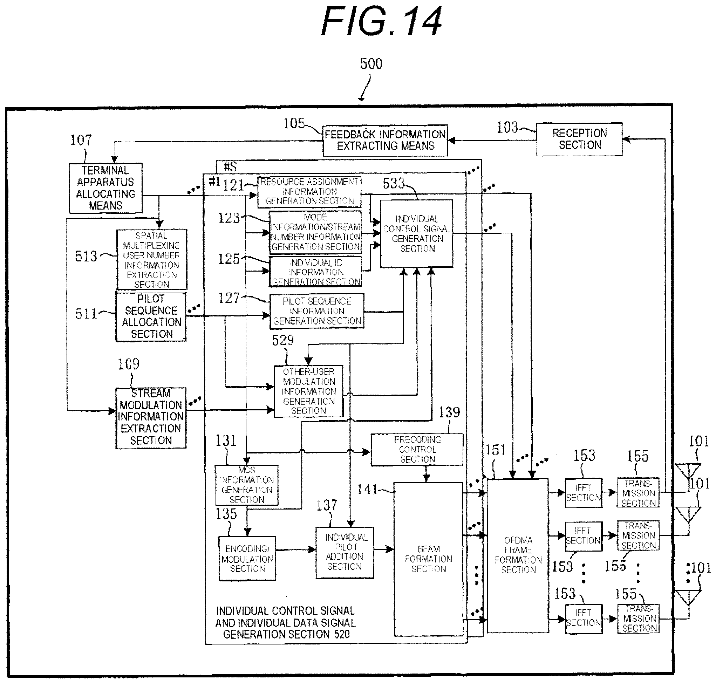

Fig. 14 is a block diagram showing the configuration of a base station apparatus 500 in Related Example 2.

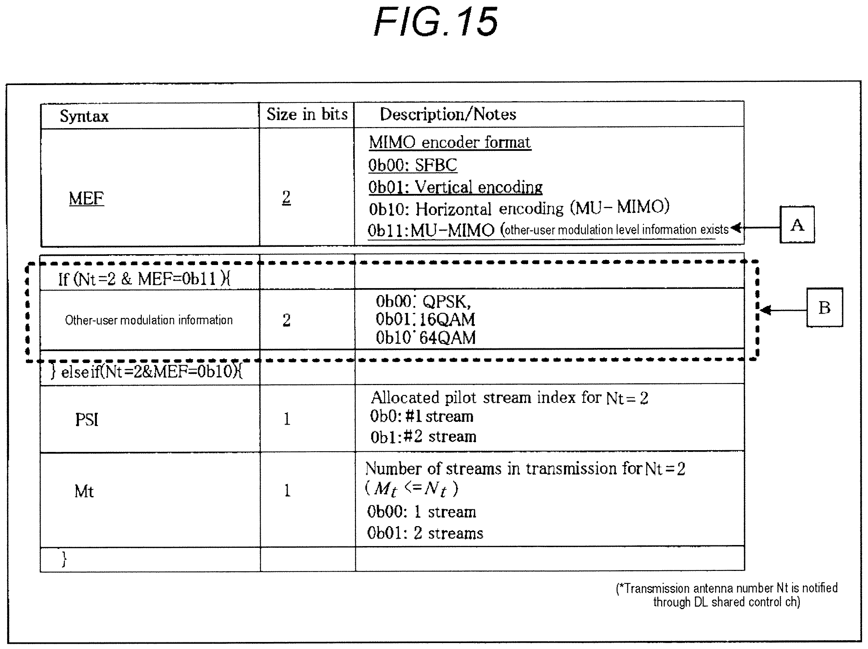

Fig. 15 is a diagram showing an example of antenna individual control information which is generated by an individual control signal generation section 533.

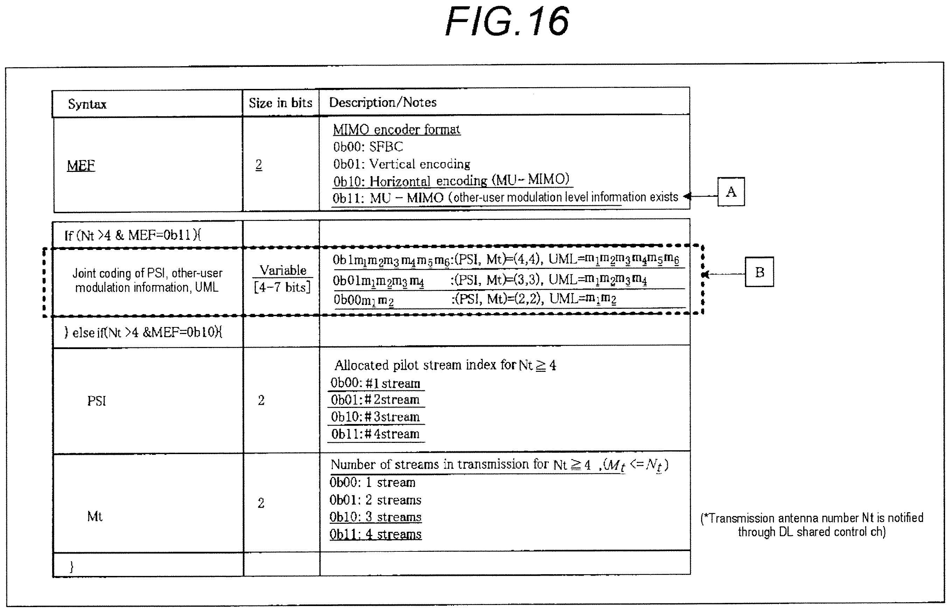

Fig. 16 is a diagram showing other Example 1 of the antenna individual control information which is generated by the individual control signal generation section 533.

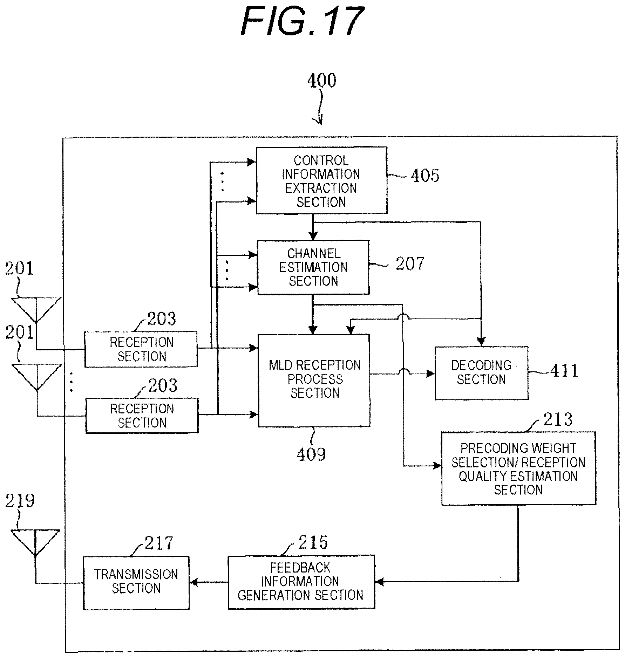

Fig. 17 is a block diagram showing the configuration of a terminal apparatus 400 in Related Example 2.

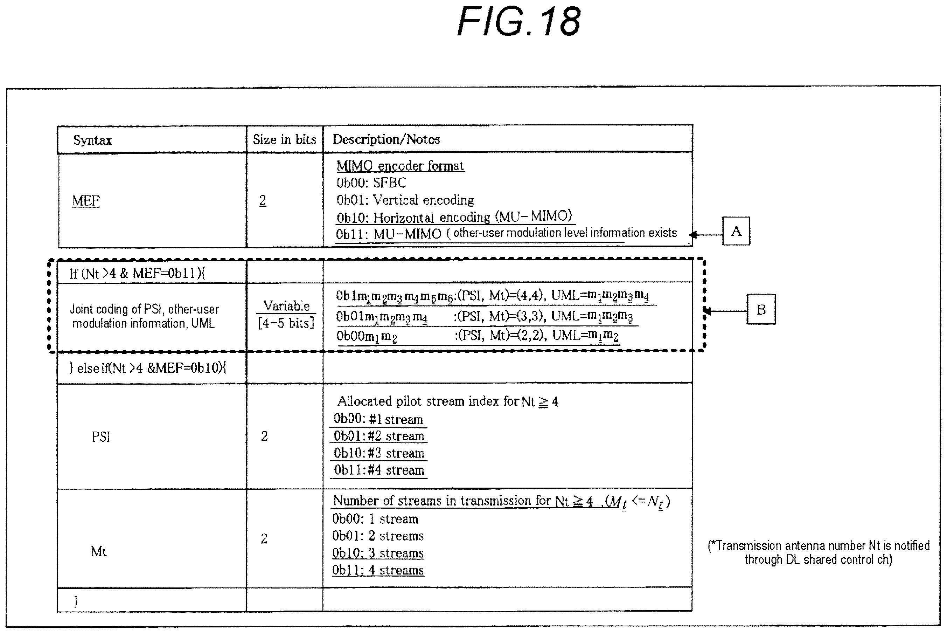

Fig. 18 is a diagram showing other Example 2 of the antenna individual control information which is generated by the individual control signal generation section 533.

Fig. 19 is a diagram showing a frame format in the downlink in a conventional example.

Fig. 20 is a diagram showing an example of MU-MIMO assignment information with respect to an n-th terminal apparatus MS#n in the conventional example.

Fig. 21 is a view schematically showing the configurations of a base station apparatus 80 and terminal apparatus 90 which perform MU-MIMO transmission in the downlink, in the conventional example.

Fig. 22 is a diagram showing an example of modulation information of other users contained in individual control information in the conventional example.

Mode for Carrying Out the Invention

Hereinafter, the embodiment of the invention and the Related Example will be described with reference to the drawings.

(Embodiment 1)

Embodiment 1 of the invention will be described with reference to Figs. 1 to 12. Fig. 1 is a block diagram showing the configuration of a base station apparatus 100 in Embodiment 1. The base station apparatus 100 shown in Fig. 1 includes a base station antenna configured by a plurality of antennas 101, a reception section 103, feedback information extracting means 105, terminal apparatus allocating means 107, a stream modulation information extraction section 109, a pilot sequence allocation section 111, a plurality of individual control signal and individual data signal generation sections 120, an OFDMA frame formation section 151, a plurality of IFFT sections 153, and a plurality of transmission sections 155.

The configuration of the base station apparatus 100 will be described with reference to Fig. 1. As an example, Fig. 1 shows the configuration in the case where the multiuser-MIMO transmission is performed on an S number of terminal apparatuses #1 to #S. In the S number of terminal apparatuses #1 to #S, a k-th terminal apparatus 200 is referred to as the terminal apparatus MS#k.

The base station antenna is configured by the plurality of antennas 101 which receive and transmit a high-frequency signal.

The reception section 103 performs a process of demodulating and decoding a reception signal from the base station antenna.

The feedback information extracting means 105 extracts feedback information notified from the terminal apparatus MS#k, from data which are decoded by the reception section 103. The feedback information from the terminal apparatuses 200 contains reception quality information and desired precoding weight information.

Based on the feedback information from the terminal apparatus MS#k, the terminal apparatus allocating means 107 decides: a combination of a plurality of terminal apparatuses which perform multiuser-MIMO transmission; resource assignment of a frequency or time with respect to the plurality of terminal apparatuses which are used in the multiuser-MIMO transmission; and the transmission format (the modulation multi-level number, the coding rate of an error correction code, the precoding weight, and the like) to each terminal apparatus.

The individual control signal and individual data signal generation sections 120 generate an individual control signal and an individual data signal based on the assignment information to the terminal apparatus MS#k, allocated by the terminal apparatus allocating means 107.

The stream modulation information extraction section 109 extracts modulation information of spatial multiplexing streams to all the terminal apparatuses MS#1 to #S for performing multiuser-MIMO transmission which are allocated by the terminal apparatus allocating means 107. The modulation information indicates the format (system, scheme) by which bit data such as QPSK, 16QAM, or 64QAM are mapped to symbols.

The pilot sequence allocation section 111 decides allocation of pilot sequences that are transmitted while being contained in the spatial multiplexing streams to all the terminal apparatuses MS#1 to #S which perform multiuser-MIMO transmission, based on modulation information of spatial multiplexing streams. Namely, the pilot sequence allocation section 111 decides the number PSI (Pilot stream index) of a pilot sequence, based on modulation information of spatial multiplexing streams. Here, S indicates the spatial multiplexing number (spatial multiplexing user number). It is assumed that, in the case of the spatial multiplexing number S, the pilot sequence number which is a natural number that is equal to or smaller than S (PSI $\leq$ S) is used.

Here, allocation of the pilot sequence and allocation of a data sequence will be described with reference to Figs. 2(a) and 2(b). Fig. 2 shows an example of allocation of the pilot sequence and allocation of a data sequence in 2 streams mapped to a subcarrier configured by a plurality of OFDM symbols. In Fig. 2(a), the symbols denoted by "1" indicate pilot symbols in the case of PSI = 1, and the rectangular frames in which nothing is written indicate regions to which data symbols of spatial streams transmitted together with the pilot sequence in the case of PSI = 1 are to be allocated. In Fig. 2(b), the symbols denoted by "2" indicate pilot symbols in the case of PSI = 2, and the rectangular frames in which nothing is written indicate regions to which data symbols of spatial streams transmitted together with the pilot sequence in the case of PSI = 2 are to be allocated.

In Figs. 2(a) and 2(b), the symbols denoted by "×" indicate null symbols that are time-frequency resources to which no pilot and data are allocated. As shown in Figs. 2(a) and 2(b), different pieces of PSI have a mutual orthogonal relationship (property of one of the time, the frequency, and the sign, or a combination of them). In Figs. 2(a) and 2(b), PSI = 1 and PSI = 2 are orthogonal to each other in a time-frequency resource.

Here, as a method of PSI allocation based on the modulation information of the spatial streams, the pilot sequence allocation section 111 performs PSI allocation in ascending (or descending) order of a stream of the modulation multi-level number. Namely, the pilot sequence allocation section 111 allocates a stream of a lower (or higher) modulation multi-level number in ascending order of the PSI number.

Here, with reference to Fig. 3, an example of a method of pilot sequence allocation with respect to modulation information of the terminal apparatuses in the embodiment will be described. As an example, the multiuser-MIMO by four users (terminal apparatuses MS#1 to #4) will be described. Fig. 3 is a diagram showing correspondence between modulation information of the spatial stream addressed to the terminal apparatuses and pilot sequence (PSI) allocation.

Fig. 3 shows the case where modulation information of the terminal apparatuses MS#1 to #4 extracted by the stream modulation information extraction section 109 is 16QAM, QPSK, 64QAM, and 16QAM in the sequence of the terminal apparatuses MS#1 to #4. Here, the pilot sequence allocation section 111 allocates the stream pilot sequence number PSI to the modulation information of the terminal apparatuses MS#1 to #4 in ascending order of the modulation multi-level number. Therefore, the stream pilot sequence numbers PSI of the terminal apparatuses MS#1 to #4 are 2, 1, 4, and 3 in the sequence of the terminal apparatuses MS#1 to #4.

As described above, in the base station apparatus 100 in the embodiment, as the method of PSI allocation based on the modulation information of the spatial streams, the pilot sequence allocation section 111 performs PSI allocation in ascending (or descending) order of a stream of the modulation multi-level number. Therefore, the base station apparatus 100 can reduce the information amount which is required in the notification of the modulation information of the other users. This effect will be described with reference to a specific example.

<Description of information amount reduction effect due to association between other-user modulation information and PSI allocation>

Here, the base station apparatus 100 allocates a stream of a smaller (or larger) modulation multi-level number in ascending order of the PSI number. As modulation information, 3 kinds or (QPSK, 16QAM, 64QAM) are contained. In the case of the spatial multiplexing number Mt, there are (Mt - 1) pieces of modulation information of other users. While excluding PSI of the spatial stream addressed to the own station, other-user modulation information $[C_1, C_2, .., C_{Mt-1}]$ is given in ascending (or descending) order of the PSI number. Here, $C_k$ indicates a k-th other-user modulation information (k = 1, ..., Mt-1). To MS#1 (user #1) shown in Fig. 3, for example, modulation information of spatial streams which are allocated as PSI = 1, 3, and 4 is sequentially given because its PSI = 2. In this case, namely, other-user modulation information $[C_1, C_2, C_3]$ are given to MS#1 (user #1) in the form of [QPSK, 16QAM, 64QAM], and always arranged in ascending (or descending) order of the modulation multi-level number. All combinations in the case where other-user modulation information is given to the terminal apparatus MS#n as described above can be listed up by the technique configured by following Steps 1, 2, and 3.

In Step 1, it is determined whether modulation information $[C_1, C_2, ..., C_{Mt-1}]$ of other users is consistent with QPSK (consistency) or not. In the case where the other user number (Mt - 1) is determined by means of 1-bit information (if the modulation information of other users is consistent with QPSK, it is expressed as 0, and, if the modulation information of other users is not consistent with QPSK, it is expressed as 1), there are Mt combinations in Step 1. Since a stream of a smaller (or larger) modulation multi-level number is allocated in ascending order of the PSI number, only one pattern exists in each of cases where the consistency number is 0 to Mt - 1.

In Step 2, it is determined whether, with respect to modulation information $[C_1, C_2, .., C_{Mt-1}]$ of other users, the other-user modulation information which is determined in Step 1 not to consistent with QPSK is consistent with 16QAM (consistency) or not. The determination is performed at times corresponding to the number of other users in which it is determined that the modulation information of other users is not consistent with QPSK, by means of 1-bit information. The number F of the modulation information of other users which is determined in Step 1 not to be consistent with QPSK has Mt kinds ranging from 0 to Mt - 1. With respect to each of them similar to Step 1, there are (F + 1) kinds of determination patterns. All combinations of modulation information of other users in Step 2 are expressed by following Exp. (1).
[Exp. 1]

$$\sum_{n=1}^{Mt} n \quad ... \ (1)$$

In Step 3, modulation information of other users which is determined in Step 2 not to be consistent with 16QAM is determined to be 64QAM because there are 3 kinds of candidates of modulation information.

Therefore, all combinations of modulation information of other users which are listed up in Steps 1 to 3 described above are equal to Exp. (1) above which shows the number of combinations in Step 2. By contrast, in the case where association (constraint) between modulation information and PSI allocation is not performed, when all combinations of modulation information of other users are calculated in Steps 1 to 3 described above, $3^{Mt-1}$ is obtained.

Next, examples of association between other-user modulation information and PSI allocation will be described with reference to Figs. 4 to 7.

Fig. 4 shows Example 1 of association between other-user modulation information and PSI allocation. In Fig. 4, in the case of the spatial multiplexing number Mt = 4, it is assumed that the number of other users is 3. As shown in Fig. 4, in the embodiment, the number of all combinations of modulation information of other users is 10. It is seen that the number of all combinations of other-user modulation information is largely reduced as compared with 27 (= 3 × 3 × 3) kinds which are equal to the number of all combinations of modulation information of other users in the case where association (constraint) between modulation information and PSI allocation is not performed.

In the base station apparatus 100 in the embodiment, therefore, association (constraint) between modulation information and PSI allocation is performed, so that the number of combinations in the notification of modulation information of other users can be reduced as compared with the case where association (constraint) between modulation information and PSI allocation is not performed. Consequently, the information amount which is required in the notification of other-user modulation information can be reduced.

<Example 2 of association between other-user modulation information and PSI allocation>

The base station apparatus 100 in the embodiment can allocate indexes to all combinations of modulation information of other users which are listed up in Steps 1 to 3 described above, and notify the indexes which are represented by bits, as other-user modulation information to the terminal apparatuses. When a conversion table (other-user modulation information conversion table) of the indexes (other-user modulation information indexes) which are represented by bits is previously held on the side of a terminal apparatus, the terminal apparatus can detect modulation information of other users.

Here, Fig. 5 shows Example 2 of association between other-user modulation information and PSI allocation. In Fig. 5, in the case of the spatial multiplexing number Mt = 4, it is assumed that the other-user number is 3. As shown in Fig. 5, the number of all combinations of modulation information of other users which are listed up in Steps 1 to 3 described above is 10 kinds similarly with Fig. 4. For example, indexes of 0 to 9 are sequentially allocated to combinations of modulation information of other users. In the embodiment, therefore, the base station apparatus 100 can notify of other-user modulation information by 4 bits to the terminal apparatuses.

<Example 3 of association between other-user modulation information and PSI allocation>

Here, Fig. 6 shows Example 3 of association between other-user modulation information and PSI allocation. In Fig. 6, in the case of the spatial multiplexing number Mt = 4, it is assumed that the other-user number is 3. As shown in the lower right portion of Fig. 6, with respect to four states (all are QPSK, two are QPSK, one is QPSK, and no QPSK) in Step 1, four states or state 1 (0000), state 2 (001X), state 3 (01XX), and state 4 (1XXX) can be represented by 4 bits in Step 2.

In the case of the example shown in Fig. 6, the terminal apparatuses can read other-user modulation information, only from the bit representation. Therefore, the terminal apparatuses are not required to hold an other-user modulation information conversion table. When the base station apparatus 100 performs association shown in Fig. 6 between other-user modulation information and PSI allocation, consequently, the memory capacities of the terminal apparatuses can be reduced.

<Example 4 of association between other-user modulation information and PSI allocation>

Here, Fig. 7 shows Example 4 of association between other-user modulation information and PSI allocation. In Fig. 7, in the case of the spatial multiplexing number Mt = 3, it is assumed that the other-user number is 2. Furthermore, modulation information is assumed to have 3 kinds: QPSK, 64QAM, and 16QAM. Also in the example shown in Fig. 7, association (constraint) between modulation information and PSI allocation is performed in Steps 1 to 3 described above, so that the number of combinations in the notification of modulation information of other users can be reduced as compared with the case where association (constraint) between modulation information and PSI allocation is not performed.

As shown in Fig. 7, with respect to three states (all are QPSK, one is QPSK, and no QPSK) in Step 1, there are three states: state 1, state 2, and state 3 in Step 2. Therefore, 3 bits of (000), (01X), and (1XX) can be allocated to the states.

In the case of the example shown in Fig. 7, similarly with the example shown in Fig. 6, the terminal apparatuses can read other-user modulation information, only from the bit representation. Therefore, the terminal apparatuses are not required to hold an other-user modulation information conversion table. When the base station apparatus 100 performs association shown in Fig. 7 between other-user modulation information and PSI allocation, consequently, the memory capacities of the terminal apparatuses can be reduced.

Referring to Figs. 1 and 8, next, the configurations of the individual control signal and individual data signal generation sections 120 will be described. Each individual control signal and individual data signal generation section #K (k = 1 to s: s is a natural number) includes a resource assignment information generation section 121, a mode information/stream number information generation section 123, an individual ID information generation section 125, a pilot sequence information generation section 127, an other-user modulation information generation section 129, an MCS information generation section 131, an individual control signal generation section 133, an encoding/modulation section 135, an individual pilot addition section 137, a precoding control section 139, and a beam formation section 141.

[Configuration related to generation of individual control signal]

The resource assignment information generation section 121 extracts resource assignment information with respect to the terminal apparatus MS#k which is allocated by the terminal apparatus allocating means 107, and generates resource assignment information based on a predetermined format.
The mode information/stream number information generation section 123 extracts information of existence of multiuser-MIMO transmission to the terminal apparatus MS#k which is allocated by the terminal apparatus allocating means 107, and, when multiuser-MIMO transmission is to be performed, extracts information of the total spatial multiplexing number across terminal apparatuses in the multiuser-MIMO, and generates mode information/stream number information based on a predetermined format.
The individual ID information generation section 125 extracts individual ID information with respect to the terminal apparatus MS#k which is allocated by the terminal apparatus allocating means 107, and generates individual ID information based on a predetermined format.
The pilot sequence information generation section 127 extracts pilot sequence allocation information with respect to the terminal apparatus MS#k from the pilot sequence allocation section 111, and generates pilot sequence information based on a predetermined format.
From the outputs of the pilot sequence allocation section 111 and the stream modulation information extraction section 109, the other-user modulation information generation section 129 extracts modulation information with respect to other terminal apparatuses which are spatially multiplexed by multiuser-MIMO transmission, excluding the terminal apparatus MS#k. By using an other-user modulation information conversion table which is previously held, then, the other-user modulation information generation section 129 generates other-user modulation information based on the other-user modulation information indexes which are represented by bits, as described with reference to Fig. 5.
In the case where, in multiuser-MIMO by four users, there are 3 kinds (QPSK, 16QAM, 64QAM) of modulation formats with respect to the terminal apparatuses, and modulation information to spatial streams and information of pilot sequence (PSI) are allocated to the terminal apparatuses as shown in Fig. 3, for example, the other-user modulation information generation section 129 performs the following operation on the terminal apparatus MS#1.
Namely, (QPSK, 64QAM, 16QAM) which are modulation information of the terminal apparatus MS#2, the terminal apparatus MS#3, and the terminal apparatus MS#4 excluding the terminal apparatus MS#1 are set to a combination of (QPSK, 16QAM, 64QAM) of other-user modulation information in the case where the modulation information is rearranged in ascending order of the pilot sequence allocation number (PSI). Other-user modulation information indexes which, in the other-user modulation information conversion table, correspond to the obtained combination of other-user modulation information are set to other-user modulation information.

The MCS information generation section 131 extracts information related to a coding rate of the modulation multi-level number and the error correction code (hereinafter, MCS (Modulation and Coding Scheme)) with respect to the terminal apparatus MS#k which is allocated by the terminal apparatus allocating means 107, and generates MCS information based on a predetermined format.

The individual control signal generation section 133 generates individual control information based on a predetermined format, on the basis of the outputs of the resource assignment information generation section 121, the mode information/stream number information generation section 123, the individual ID information generation section 125, the pilot sequence information generation section 127, the other-user modulation information generation section 129, and the MCS information generation section 131. Based on the generated individual control information, the individual control signal generation section 133 applies predetermined error detection code process and error detection code (CRC code) addition process, and a predetermined modulation process to form an individual control signal.

Referring to Fig. 8, an example of the individual control signal generated by the individual control signal generation section 133 will be described.

Fig. 8 is a diagram showing an example of the individual control information generated by the individual control signal generation section 133. Among the individual control information (however, the resource assignment information, the MCS information, and the individual ID information are omitted) shown in Fig. 8, in A) MIMO mode information (MEF), in addition to a conventional MU-MIMO mode (a mode which does not contain other-user modulation information), an MU-MIMO mode (0b11) which contains other-user modulation level information is added. Moreover, in the case of B) an MU-MIMO mode (0b11) which contains other-user modulation level information, other-user modulation information is notified every spatial multiplexing number Mt by using a predetermined bit number. Here, Nt indicates the number of transmission antennas. It is assumed that the transmission antenna number Nt has been notified by other DL control information.

In a conventional MU-MIMO mode (0b10) or a MU-MIMO mode (0b11) which contains other-user modulation level information, furthermore, as described above, PSI is allocated in ascending order of the multi-level number of a spatial stream, to PSI information and PSI information containing Mt information. Mt indicates the spatial multiplexing number (here, equal to the multiuser number).

[Configuration related to generation of individual data signal]

The encoding/modulation section 135 performs an encoding process and a modulation process on data (individual data) addressed to the terminal apparatus MS#k which is allocated by the terminal apparatus allocating means 107, in accordance with the coding rate and modulation multi-level number based on the MCS information from the MCS information generation section 131, and generates symbol data addressed to the terminal apparatus MS#k.

The individual pilot addition section 137 adds an individual pilot signal to the symbol data of the terminal apparatus MS#k, based on the information of the pilot sequence information generation section 127. The pilot sequences use time division multiplexing, frequency division multiplexing, or code division multiplexing in the unit of OFDM subcarrier, and use known signals which are orthogonal between sequences. Therefore, the terminal apparatuses can receive the signals while suppressing interference between spatial multiplexing streams, and improve the channel estimation accuracy of a MIMO propagation channel using the individual pilot signal.

The precoding control section 139 extracts precoding weight information with respect to the terminal apparatus MS#k which is allocated by the terminal apparatus allocating means 107, and, based on precoding information, controls the precoding weight in the subsequent beam formation section 141.

Based on control of the precoding control section 139, the beam formation section 141 multiplies a precoding weight Vt with a signal xs which is supplied from the individual pilot addition section 137, and in which the individual pilot signal is added to the symbol data addressed to the terminal apparatus MS#k, and outputs data wjxs corresponding to the transmission antenna number (Nt).

In the case where the transmission antenna number is Nt, the transmission weight vector Vt is represented by an Nt-th column vector having an Nt number of vector elements wj. Here, j = 1, ..., Nt.

Based on the resource assignment information from the resource assignment information generation section 121, the OFDMA frame formation section 151 maps individual data signals which are output from the beam formation section 141, and which are addressed to the terminal apparatus MS#k corresponding to the transmission antenna number (Nt), and the individual control signal addressed to the terminal apparatus MS#k, to a subcarrier in a predetermined OFDMA frame.

The individual control signal addressed to the terminal apparatus MS#k is transmitted without being formed into a beam, and, in this case, the reception quality may be improved by applying a transmission diversity technique such as CDD, STBC, or SFBC.

The IFFT sections 153 perform an IFFT process on an Nt number of inputs from the OFDMA frame formation section 151, respectively to add a predetermined cyclic prefix (or a guard interval), and then output the resulting signals.

The transmission sections 155 convert the baseband signals from the IFFT sections 153 to high-frequency signals of the carrier frequency band, and output the high-frequency signals through the plurality of antennas 101 constituting the base station antenna.

Next, the configuration of the terminal apparatus MS#k (terminal apparatus 200) in Embodiment 1 will be explained with reference to Fig. 9. The terminal apparatus 200 shown in Fig. 9 includes a plurality of reception antennas 201, a plurality of reception sections 203, a control information extraction section 205, a channel estimation section 207, an MLD reception process section 209, a decoding section 211, a precoding weight selection/reception quality estimation section 213, a feedback information generation section 215, a transmission section 217, and an transmission antenna 219.

Here, k is obtained by uniquely numbering terminal apparatuses 200 in a communication area, and indicates a natural number which is equal to or smaller than a predetermined value. Although it is assumed that the transmission antenna 219 is different from the reception antennas 201, a configuration where an antenna is shared may be employed. Alternatively, a configuration where plural transmission antennas 219 and plural transmission sections 217 are provided and directional transmission is performed may be employed.

The plurality of reception antennas 201 receive the high-frequency signals from the base station apparatus 100. The plurality of reception sections 203 convert the high-frequency signals which are received through the reception antennas 201, into baseband signals.

The control information extraction section 205 extracts the control information which is transmitted from the base station apparatus 100, from the outputs of the reception sections 203.

The channel estimation section 207 performs channel estimation of a MIMO propagation channel on the outputs of the reception sections 203, and outputs a result of the channel estimation to the MLD reception process section 209.

In the case where the individual control signal transmitted to the terminal apparatus MS#k and for the multiuser-MIMO transmission is contained in the control information extracted by the control information extraction section 205, the MLD reception process section 209 performs an MLD reception process on the spatial multiplexing streams transmitted by multiuser MIMO, based on the control information contained in the individual control signal, and the channel estimation result from the channel estimation section 207. The decoding section 211 performs a decoding process based on an output of the MLD reception process section 209.

The precoding weight selection/reception quality estimation section 213 selects a suitable precoding weight based on the channel estimation result, and estimates the reception quality at the selected weight.

The feedback information generation section 215 generates a data sequence of a predetermined format in order to report an output of the precoding weight selection/reception quality estimation section 213 as feedback information to the base station apparatus 100.

The transmission section 217 performs various transmission processes for transmitting the feedback information which is the output of the feedback information generation section 215, to the base station apparatus 100, and transmits the information to the base station apparatus 100 through the transmission antenna 219.

Next, the operation of the terminal apparatus 200 will be described with reference to a process procedure shown in Fig. 10 between the base station apparatus 100 and the terminal apparatus 200.

In Step S1, the base station apparatus 100 periodically transmits a pilot signal (common pilot signal) which is not multiplied with the precoding weight, together with the control information signal and the like.

In Step S2, in the terminal apparatus 200, the channel estimation section 207 extracts the common pilot signal, and calculates a channel estimation value.

In Step S3, in the terminal apparatus 200, the precoding weight selection/reception quality estimation section 213 selects a precoding weight in which the reception quality is best, from several precoding weight candidates, based on the channel estimation value calculated in Step S2. In Step S4, the terminal apparatus 200 estimates the reception quality based on the precoding weight selected in Step S3.

In Step S4A, in the terminal apparatus 200, the feedback information generation section 215 generates a data sequence of the predetermined format in order to report the output of the precoding weight selection/reception quality estimation section 213 as feedback information to the base station apparatus 100. In the terminal apparatus 200, then, the transmission section converts the baseband signal into a high-frequency signal, and outputs the high-frequency signal through the transmission antenna 219.

In Step S5, in the base station apparatus 100, the terminal apparatus allocating means 107 allocates terminal apparatuses which perform multiuser-MIMO transmission, based on precoding weight selection/reception quality estimation information which is fed back from terminal apparatuses 200 in the communication area, and, in Step S5A, individual control information notifying the assignment information is transmitted to the terminal apparatus 200.

In Step S6, in the terminal apparatus 200, the control information extraction section 205 detects individual control information which is addressed to the own station, and which contains individual ID information in the own terminal apparatus, in the individual control signals notified from the base station apparatus 100. The resource assignment information, MCS information, and mode information which are control information contained in the individual control signal addressed to the own station are extracted.

In Step S7, in the terminal apparatus 200, in the case where the mode information indicates a mode in which multiuser-MIMO transmission is performed, the control information extraction section 205 further extracts the stream number information, the pilot sequence information, and the other-user modulation information.

In steps S8 and S8A, the base station apparatus 100 transmits the individual control signal, and then transmits the individual data signal.

In Step S9, in the terminal apparatus 200, based on the spatial multiplexing stream information Mt and resource assignment information which are contained in the individual control information in multiuser-MIMO transmission, the channel estimation section 207 extracts individual pilot signals that are allocated by PSI corresponding to the spatial multiplexing stream number (Mt) contained in resources to which spatial multiplexing streams are allocated, and performs channel estimation of a MIMO propagation channel. In the case where the spatial multiplexing stream number is Mt, individual pilot signals that are contained respectively in an Mt number of spatial streams, and that are allocated by PSI = 1 to Mt are extracted, and performs channel estimation. In the case where the transmission antenna number is Mr, a channel matrix H indicating a MIMO propagation channel contains elements $h(n, m)$ of Mr rows and Mt columns where $n = 1, ..., Mr$, $m = 1, ..., Mt$, and $h(n, m)$ indicates a channel estimation value in the case where an m-th spatial stream (i.e., a spatial stream containing a pilot sequence of PSI = m) is received by an n-th reception antenna.

Based on the channel estimation result H, the pilot sequence information PSI with respect to the spatial stream addressed to the own station, the modulation information contained in the MCS information, and the other-user modulation information, the MLD reception process section 209 performs the following MLD reception processes (1) to (3).

    (1) The MLD reception process section 209 converts the other-user modulation information that is the indexes (other-user modulation information indexes) which are represented by bits, into modulation information of spatial streams, by using the other-user modulation information conversion table. In the case where the PSI of the spatial stream addressed to the own station is s-th information, the modulation information obtained in this process contains modulation information in the ascending sequence with respect to the PSI excluding the s-th information. Namely, in the case of Mt = 4, and in the case where the own station stream is PSI = 2, the information is modulation information of spatial streams transmitted as other-user modulation information together with PSI = 1, PSI = 3, and PSI = 4.

    (2) The MLD reception process section 209 generates a transmission signal candidate Sm from the pilot sequence information PSI, the MCS information, and the modulation information of the spatial stream obtained from the other-user modulation information. Here, the transmission signal candidate is an Mt-dimensional vector, and an element Dk which is a k-th element of the vector is configured by a modulation symbol candidate of the spatial stream which is transmitted together with PSI = k where k is a natural number from 1 to Mt.

    (3) The MLD reception process section 209 generates a replica of the reception signal from the channel estimation value H of the MIMO propagation channel, and the transmission signal candidate Sm, and decides a signal candidate Smax which minimizes the Euclidian distance with a reception signal r, as the transmission signal. From the signal candidate Smax which is decided based on the maximum likelihood estimation rule, an m-th element Dm corresponding to PSI = m of the stream addressed to the own station is set as a symbol determination value of the spatial stream of the own station. Alternatively, a technique of obtaining the likelihood value (soft determination value) for each bit by using a predetermined metric may be applied to the transmission signal Smax which is decided based on the maximum likelihood estimation rule. In this case, the bit likelihood value (soft determination value) with respect to the m-th element Dm corresponding to PSI = m of the stream addressed to the own station is the symbol soft determination vale of the spatial stream of the own station.

As described above, the MLD reception process section 209 estimates symbol determination values of all spatial streams based on the maximum likelihood estimation rule, and calculates their likelihood information. Then, the MLD reception process section 209 outputs only the likelihood information with respect to the stream addressed to the own station.

In Step S10, in the terminal apparatus 200, the decoding section 211 performs an error correction decoding process by using the coding rate information of an error correction code which is contained in the MCS information with respect to the spatial stream addressed to the own station, and the output of the MLD reception process section 209.

According to the embodiment, as described above, attention is focused on that also the pilot symbols are precoded, and the implicit rule that the pilot sequence allocation section 111 performs association with the pilot sequence number in ascending (or descending) order of the modulation multi-level number is set. By contrast, in the case where, as shown in Fig. 2, the pilot symbols do not depend on the spatial stream, and are uniformly distributed while the rate of the pilot symbols to the data symbols is constant, the reception performance is identical even when any PSI is selected with respect to the spatial stream. Without reduction of the reception performance due to that, as used in the embodiment, the pilot sequence number is allocated based on modulation information with respect to the spatial stream, application of MLD reception is enabled while reducing the information amount which is required in the notification of the other-user modulation information.

In the base station apparatus 100 in the embodiment, although the other-user modulation information generation section 129 allocates the other-user modulation information indexes to all combinations of modulation information of other users, the other-user modulation information indexes may be allocated while excluding a part of the combinations.

Hereinafter, as a method of excluding a part of the combinations, two methods will be described with reference to Fig. 11. Example 1 of the method of excluding a part of the combinations will be described with reference to Fig. 11. Fig. 11 is a diagram showing combinations of exclusions in combination numbers of modulation information of other users. Combinations of modulations in which the complexity of terminals to which MLD reception is applied is high (the number of candidates in MLD reception is enormous) are previously excluded from the notification of other-user modulation information. When combinations of modulation information in which the number of MLD candidates is so large that they cannot be applied to a terminal apparatus with a realistic hardware scale are previously excluded from other-user modulation information, therefore, the overhead of the other-user modulation multi-level number can be further reduced without substantial limitation of MLD application.

In the case where 64QAM is the maximum modulation multi-level number which is available in one spatial stream, this can be realized by excluding user combinations containing N or more 64QAM symbols. Here, N indicates a predetermined natural number. As shown in Fig. 11, in the case of the spatial multiplexing number Mt = 4, for example, the number of other users is 3, and the number of all combinations of modulation information of other users is 10 as shown in Fig. 11. In the case where user combinations containing 3 or more 64QAM symbols are excluded, among the combinations of modulation information of other users shown in Fig. 11, (1) user combinations in which all are 64QAM, and (2) user combinations containing 3 or more 64QAM symbols are excluded, so that the number of the kinds of patterns can be reduced by 2. When indexes of 0 to 9 are sequentially allocated to them, therefore, combinations of modulation information of other users can be notified by using 3 bits.

Next, Example 2 of the method of excluding a part of the combinations will be described with reference to Fig. 11. From the viewpoint of system throughput, combinations of modulation information of other users in which the rate is low are previously excluded from notifications of other-user modulation information. From the viewpoint of system throughput, combinations of modulation information of other users in which the rate is low can be realized also by reducing the spatial multiplexing number and using streams of a high modulation multi-level number. Therefore, the overhead of other-user modulation multi-level number can be further reduced without causing substantial reduction of the throughput. In the case where QPSK is the minimum modulation multi-level number which is available in one spatial stream, for example, this can be realized by excluding user combinations containing N or more QPSK symbols. Here, N indicates a predetermined natural number.

In the case of the spatial multiplexing number Mt = 4, for example, the number of other users is 3, and the number of all combinations is 10 as shown in Fig. 11. In the case where user combinations containing 3 or more QPSK symbols are excluded, (1) user combinations in which all of 4 users are QPSK, and (2) user combinations in which 3 users are QPSK are excluded, so that the number of the kinds of patterns can be reduced by 2. When indexes of 0 to 9 are sequentially allocated to them, therefore, combinations of modulation information of other users can be notified by using 3 bits.

In the base station apparatus 100 in the embodiment, the pilot sequence allocation section 111 decides the allocation of pilot sequences that are transmitted while being contained in the spatial multiplexing streams to all the terminal apparatuses MS#1 to #S which perform multiuser-MIMO transmission, based on modulation information of spatial multiplexing streams. As the method of allocating PSI to other-user modulation information in the pilot sequence allocation section 111, a method of allocating PSI such as shown in Fig. 12 may be used. Fig. 12 is a diagram showing an example of the method of allocating PSI in the pilot sequence allocation section 111.

In the method of allocating PSI shown in Fig. 12, while maintaining relationships of the ascending order of modulation multi-level numbers (in the figure, the clockwise solid arrow A)/the descending order (in the figure, the counterclockwise broken line arrow B), the base station apparatus 100 performs a cyclic shift (A/B). The start position may be arbitrarily set. When the terminal apparatus 200 shares the method of allocating PSI such as shown in Fig. 12 with the base station apparatus 100, application of a similar demodulation process is enabled.

As described with reference to Fig. 12, in the case where the method of allocating PSI is changed in the pilot sequence allocation section 111, other-user modulation information in which the start position of the cyclic shift shown in Fig. 12 is started from (1) fixed modulation information, or (2) consistency of modulation information of the own station is used. In the case where the start position shown in Fig. 12 is set to (1) fixed modulation information, the above-described embodiment can generate other-user modulation information.

By contrast, in the case where other-user modulation information in which the start position of the cyclic shift shown in Fig. 12 is started from (2) consistency of modulation information of the own station is used, all combinations of modulation information of other users can be listed up by following Steps 1 to 3. In the case where the spatial multiplexing number is Mt, there are (Mt - 1) pieces of modulation information of other users. When indexes are allocated to combinations of the modulation information of other users, the indexes which are represented by bits are notified as other-user modulation information, and a conversion table (other-user modulation information conversion table) of the indexes (other-user modulation information indexes) which are represented by bits is previously held on the side of a terminal apparatus, it is possible to detect other-user modulation information.

In Step 1, it is determined, by means of 1-bit information for (Mt - 1) users, whether modulation information of other users is consistent with the own-station modulation number (consistency) or not. If modulation information of other users is consistent with the own-station modulation number, it is expressed as 0, and, if modulation information of other users is not consistent with the own-station modulation number, it is expressed as 1.

In Step 2, next, it is determined, by means of 1-bit information for users in which it is determined in Step 1 that there is no consistency with the own-station modulation number (inconsistency), whether cyclically shifted modulation information is consistent with the own-station modulation number (consistency) or not. If cyclically shifted modulation information is consistent with the own-station modulation number, it is represented as 0, and, if cyclically shifted modulation information is not consistent with the own-station modulation number, it is represented as 1.

In Step 3, then, it is determined, by means of 1-bit information for users in which it is determined in Step 2 that there is no consistency with cyclically shifted modulation information (inconsistency), whether further cyclically shifted modulation information is consistent with the own-station modulation number (consistency) or not. If cyclically shifted modulation information is consistent in Step 3 with the own-station modulation number, it is represented as 0, and, if cyclically shifted modulation information is not consistent in Step 3 with the own-station modulation number, it is represented as 1.

In order to further reduce other-user modulation information, consistency of other-user modulation information with the own-station modulation number may be determined in Step 1 by means of 1 bit (0: consistent, 1: inconsistent) for (Mt - 1) users, and if modulation information of all other users are consistent with the modulation multi-level number of the own station, 1 may be set, and, in other cases, 0 may be set. In the configuration, in the case where a terminal class in which MLD reception is enabled with respect to spatial streams of the same modulation multi-level number exists in the terminal apparatuses 200, when, based on the above-described modulation information of other users configured by 1 bit, consistency with the modulation multi-level number of the own station is attained, MLD reception can be applied, and the reception performance can be improved. In single-user MIMO reception, in the case where all spatial streams have the same modulation multi-level number, when this technique is applied in terminal apparatuses which support MLD reception, particularly, the MLD process which is identical with single-user MIMO reception can be applied to multi-user MIMO reception, and the reception performance can be improved without adding a new reception circuit.

The configuration has been described where, in the base station apparatus 100 in Embodiment 1, modulation information with respect to the spatial stream addressed to the own station generates, in the MCS information generation section 131, notification information together with information of the coding rate of error correction. Fig. 13 shows another configuration for this. Fig. 13 is a diagram showing another configuration of the base station apparatus 100 in Embodiment 1.

The base station apparatus 300 shown in Fig. 13 is different from the base station apparatus 100 shown in Fig. 1 in that, in an individual control signal and individual data signal generation sections 320, (1) an all-user modulation information generation section 157 is disposed in place of the other-user modulation information generation section 129, and (2) a coding rate information generation section 159 is disposed in place of the MCS information generation section 131. Hereinafter, the configuration which is different from the base station apparatus 100 shown in Fig. 1 will be described, the common configuration is denoted by the same reference numerals, and its detailed description is omitted. In order to discriminate the plurality of individual control signal and individual data signal generation sections 320 from one another, they are sometimes referred to as the individual control signal and individual data signal generation sections #K (k = 1 to s: s is a natural number).

The coding rate information generation section 159 extracts coding rate information with respect to the spatial stream addressed to the own station, and generates coding rate information based on a predetermined format.

The all-user modulation information generation section 157 notifies modulation information in which the number of combinations of all pieces of modulation information addressed to own user and other users is reduced based on association (constraint) between modulation information and PSI allocation. From the outputs of the pilot sequence allocation section 111 and the stream modulation information extraction section 109, namely, the all-user modulation information generation section 157 extracts other-user modulation information with respect to other terminal apparatuses which are spatially multiplexed by multiuser-MIMO transmission, including the terminal apparatus MS#k, adds modulation information addressed to own station to the above-described other-user modulation information conversion table, and generates all-user modulation information based on all-user modulation information indexes which are represented by bits.

In the case where 3 kinds (QPSK, 16QAM, 64QAM) exist as modulation information, for example, all combinations of modulation information of all users can be listed up by procedure shown in following Steps 1 to 3. In the case where the spatial multiplexing number is Mt, there are Mt pieces of modulation information of all users.

In Step 1, it is determined, by means of 1-bit information (0: consistent, 1: inconsistent) for the user number (Mt), whether modulation information of all users is consistent with QPSK (consistency) or not. If modulation information of all users is consistent with QPSK, it is expressed as 0, and, if modulation information of all users is not consistent with QPSK, it is expressed as 1. There are (Mt + 1) combinations of modulation information of all users in Step 1.

In Step 2, with respect to modulation information of users in which it is determined in Step 1 that modulation information of all users is not consistent with QPSK, consistency with 16QAM is determined by means of 1-bit information. Combinations of modulation information of all users in Step 2 are expressed by following Exp. (2).
[Exp. 2]

$$\sum_{n=1}^{Mt+1} n \quad ... \; (2)$$

In Step 3, modulation information of users which is determined in Step 2 not to be consistent with 16QAM is determined to be 64QAM.

Therefore, the number of combinations of modulation information of all users which are listed up in Steps 1 to 3 described above is equal to the sum of the number of combinations (Mt + 1) in Step 1 and Exp. (2) above which shows the number of combinations in Step 2. In the case of the spatial multiplexing number Mt = 4, for example, the number of all users is 4, and the number of all combinations of modulation information of users which are listed up in Steps 1 to 3 described above is 15. Similarly with case where other-user modulation information is notified, therefore, all-user modulation information can be notified by using 4 bits. When considering also the effect of reduction of the MCS information, an effect of reduction of the required bit number can be attained as compared with the case where association (constraint) between modulation information and PSI allocation is not performed.

Next, the operation of the terminal apparatus 200 with respect to the base station apparatus 300 will be described with reference to Fig. 10. Referring to Fig. 10, only steps where the terminal apparatus 200 performs operations which are different from those with respect to the base station apparatus 100 will be described, and description of steps where the terminal apparatus performs the identical operations is omitted.

In Step S6 shown in Fig. 10, in the terminal apparatus 200, the control information extraction section 205 detects individual control information which is addressed to the own station, and which contains individual ID information in the own terminal apparatus, in the individual control signals notified from the base station apparatus 300, and extracts the resource assignment information and mode information which are control information contained in the individual control signal addressed to the own station.

In Step S7 shown in Fig. 10, in the terminal apparatus 200, in the case where the mode information indicates a mode in which multiuser-MIMO transmission is performed, the control information extraction section 205 further extracts the stream number information, the pilot sequence information, the coding rate information, and the all-user modulation information.

In Step S8 shown in Fig. 10, the base station apparatus 300 transmits the individual control signal, and then transmits the individual data signal.

With respect to the base station apparatus 300, the terminal apparatus 200 performs the following operation by using the individual control addressed to the own station which is extracted by the control information extraction section 205.

Based on the channel estimation result H, the pilot sequence information PSI with respect to the spatial stream addressed to the own station, and the modulation information contained in the all-user modulation information, the MLD reception process section 209 performs the following MLD reception processes (1) to (3).

(1) The MLD reception process section 209 converts the all-user modulation information that is the indexes (all-user modulation information indexes) which are represented by bits, into modulation information of spatial streams, by using the all-user modulation information conversion table. The modulation information obtained in this process contains modulation information in the ascending sequence with respect to the PSI. Namely, in the case of Mt = 4, modulation information of spatial streams transmitted as all-user modulation information together with PSI = 1, PSI = 2, PSI = 3, and PSI = 4 is obtained.

(2) The MLD reception process section 209 generates a transmission signal candidate Sm from the pilot sequence information PSI and the modulation information of the spatial stream obtained from the all-user modulation information. Here, the transmission signal candidate Sm is an Mt-dimensional vector, and an element Dk which is a k-th element of the vector is configured by a modulation symbol candidate of the spatial stream which is transmitted together with PSI = k where k is a natural number from 1 to Mt.

(3) The MLD reception process section 209 generates a replica of the reception signal from the channel estimation value H of the MIMO propagation channel, and the transmission signal candidate Sm, and decides a signal candidate Smax which minimizes the Euclidian distance with a reception signal r, as the transmission signal. From the signal candidate Smax which is decided based on the maximum likelihood estimation rule, an m-th element Dm corresponding to PSI = m of the stream addressed to the own station is set as a symbol determination value of the spatial stream of the own station. Alternatively, a technique of obtaining the likelihood value (soft determination value) for each bit by using a predetermined metric may be applied to the transmission signal Smax which is decided based on the maximum likelihood estimation rule. In this case, the bit likelihood value (soft determination value) with respect to the m-th element Dm corresponding to PSI = m of the stream addressed to the own station is the symbol soft determination value of the spatial stream of the own station.

As described above, the MLD reception process section 209 estimates symbol determination values of all spatial streams based on the maximum likelihood estimation rule, and calculates their likelihood information. Then, the section outputs only the likelihood information with respect to the stream addressed to the own station.

In Step S10 shown in Fig. 10, in the terminal apparatus 200, the decoding section 211 performs an error correction decoding process by using the coding rate information of an error correction code which is contained in the coding rate information with respect to the spatial stream addressed to the own station, and the output of the MLD reception process section 209.

(Related Example 2)

Next, Related Example 2 of the invention will be described with reference to Figs. 14 to 18. Fig. 14 is a block diagram showing the configuration of a base station apparatus 500 in Related Example 2. In the configuration of the base station apparatus 500 shown in Fig. 14, the components which are in common with Fig. 1 are denoted by the same reference numerals, and their detailed description is omitted. The base station apparatus 500 shown in Fig. 14 includes the base station antenna configured by the plurality of antennas 101, the reception section 103, the feedback information extracting means 105, the terminal apparatus allocating means 107, the stream modulation information extraction section 109, a pilot sequence allocation section 511, a spatial multiplexing user number information extraction section 513, a plurality of individual control signal and individual data signal generation sections 520, the OFDMA frame formation section 151, the plurality of IFFT sections 153, and the plurality of transmission sections 155. In order to discriminate the plurality of individual control signal and individual data signal generation sections 520 from one another, they are sometimes referred to as the individual control signal and individual data signal generation sections #K (k = 1 to s: s is a natural number).

Each individual control signal and individual data signal generation section #k (k = 1 to s; s is a natural number) includes the resource assignment information generation section 121, the mode information/stream number information generation section 123, the individual ID information generation section 125, the pilot sequence information generation section 127, an other-user modulation information generation section 529, the MCS information generation section 131, an individual control signal generation section 533, the encoding/modulation section 135, the individual pilot addition section 137, the precoding control section 139, and the beam formation section 141.

The pilot sequence allocation section 511 performs allocation of pilot sequences (allocation of the pilot sequence number PSI for each spatial stream) based on the spatial multiplexing number Mt extracted from the spatial multiplexing user number information extraction section 513. In the case of the spatial multiplexing number Mt, the pilot sequence number (PSI $\leq$ Mt) which is a natural number that is equal to or smaller than Mt is allocated to an Mt number of terminal apparatuses MS#n which perform spatial multiplexing.

In the case where the output value PSI of the pilot sequence information generation section 127 indicating the pilot sequence number PSI with respect to the spatial stream of the own station is a predetermined value L (PSI = L), the other-user modulation information generation section 529 outputs other-user modulation information based on the output of the stream modulation information extraction section 109. As other-user modulation information, a predetermined bit number is used for each spatial multiplexing number Mt. In the case where 3 kinds or QPSK, 16QAM, and 64QAM are contained in modulation information, for example, 2 bits are used for one spatial stream addressed to another station. In other cases (PSI $\neq$ L), other-user modulation information is not output. Hereinafter, the operation will be described by way of example for the case of L = Mt.

The individual control signal generation section 533 generates individual control information based on a predetermined format, on the basis of the outputs of the resource assignment information generation section 121, the mode information/stream number information generation section 123, the individual ID information generation section 125, the pilot sequence information generation section 127, the other-user modulation information generation section 529, and the MCS information generation section 131. Based on the generated individual control information, the individual control signal generation section 533 applies a predetermined error detection code process, an error detection code (CRC code) addition process, and a predetermined modulation process to form an individual control signal.

Here, antenna individual control information will be described with reference to Fig. 15. Fig. 15 is a diagram showing an example of antenna individual control information which is generated by the individual control signal generation section 533 in Related Example 2. Fig. 15 shows an example of antenna individual control information in the case where two transmission antennas are used, i.e., the spatial multiplexing number Mt is 2 or less. In the figure, the resource assignment information, the MCS information, and the individual ID information are omitted.

In (A) MIMO mode information (MEF) shown in Fig. 15, in addition to a conventional MU-MIMO mode (a mode which does not contain other-user modulation information), an MU-MIMO mode (0b11) which contains other-user modulation level information is added.

The case of (B) the MU-MIMO mode (0b11) which is shown in Fig. 15, and which contains other-user modulation level information occurs only in the case where the output value PSI of the pilot sequence information generation section 127 indicating the pilot sequence number PSI with respect to the spatial stream of the own station is the predetermined value L = Mt (PSI = Mt). Therefore, the necessity of explicitly transmitting PSI and Mt information is eliminated. Consequently, PSI and Mt-bit allocation areas which are used in a conventional MU-MIMO mode can be used as other-user modulation information.

By contrast, in the case of a conventional MU-MIMO mode (0b10) which does not contain other-user modulation information, the pilot sequence number PSI and the spatial multiplexing number Mt are notified by a required bit number. Here, Nt indicates the number of transmission antennas. It is assumed that this has been notified by other DL control information.

Furthermore, other Example 1 of the antenna individual control information which is generated by the individual control signal generation section 533 will be described with reference to Fig. 16. Fig. 16 is a diagram showing another example of the antenna individual control information which is generated by the individual control signal generation section 533. Fig. 16 shows an example of the antenna individual control information in the case where the number of the transmission antennas is 4 or more (the spatial multiplexing number Mt is 4 or less). However, the resource assignment information, the MCS information, and the individual ID information are omitted.

In (A) MIMO mode information (MEF) shown in Fig. 16, in addition to a conventional MU-MIMO mode (a mode which does not contain other-user modulation information), an MU-MIMO mode (0b11) which contains other-user modulation level information is added.

In the case of (B) the MU-MIMO mode (0b11) which is shown in Fig. 16, and which contains other-user modulation level information, the output value PSI of the pilot sequence information generation section 127 indicating the pilot sequence number PSI with respect to the spatial stream of the own station is the predetermined value L = Mt (PSI = Mt). Therefore, the necessity of explicitly transmitting PSI information is eliminated. Consequently, bit representation which contains the spatial multiplexing number Mt information and other-user modulation information is used. In this case, candidates of the spatial multiplexing number are in 3 states or Mt = 2, 3, or 4, and hence 2 bits are required in the case where the spatial multiplexing number Mt is singly sent. When a bit representation containing other-user modulation information is used, however, a required bit number can be reduced by using the following bit representation. Here, $m_k$ indicates the bit state of 0 or 1.

In the case of Mt = 4, as shown in Fig. 16, the bit representation (Mt, PSI) containing the spatial multiplexing number Mt information and other-user modulation information is $0b1m_1m_2m_3m_4m_5m_6$. The arrangement of $(m_1m_2m_3m_4m_5m_6)$ is a bit representation showing other-user modulation information for the other 3 station users.

In the case of Mt = 3, as shown in Fig. 16, the bit representation (Mt, PSI) containing the spatial multiplexing number Mt information and other-user modulation information is $0b01m_1m_2m_3m_4$. The arrangement of $(m_1m_2m_3m_4)$ is a bit representation showing other-user modulation information for the other 2 station users.

In the case of Mt = 2, as shown in Fig. 16, the bit representation (Mt, PSI) containing the spatial multiplexing number Mt information and other-user modulation information is $0b00m_1m_2$. The arrangement of $(m_1m_2)$ is a bit representation showing other-user modulation information for the other 1 station user.

As described above, in the case of the MU-MIMO mode (0b11) containing other-user modulation level information, PSI and an Mt-bit allocation areas which are used in a conventional MU-MIMO mode can be used as other-user modulation information. By contrast, in the case of a conventional MU-MIMO mode (0b10) which does not contain other-user modulation information, the pilot sequence number PSI and the spatial multiplexing number Mt are notified by a required bit number. Here, Nt indicates the number of transmission antennas. It is assumed that this has been notified by other DL control information.

Next, the configuration of a terminal apparatus 400 in Related Example 2 will be described with reference to Fig. 17. Fig. 17 is a block diagram showing the configuration of the terminal apparatus 400 in Related Example 2. In the terminal apparatus 400 shown in Fig. 17, the configuration which is different from the terminal apparatus 200 shown in Fig. 17 will be described, the common configuration is denoted by the same reference numerals, and its detailed description is omitted.

The terminal apparatus 400 shown in Fig. 17 includes the plurality of reception antennas 201, the plurality of reception sections 203, a control information extraction section 405, the channel estimation section 207, an MLD reception process section 409, a decoding section 411, the precoding weight selection/reception quality estimation section 213, the feedback information generation section 215, the transmission section 217, and the transmission antenna 219. Hereinafter, the description of the operation of the terminal apparatus 400 which refers to the number of Step S affixed to the middle or end of a sentence corresponds to that of the operation of the terminal apparatus 200 which refers to the number of Step S shown in Fig. 10.

The control information extraction section 405 detects individual control information which is addressed to the own station, and which contains individual ID information in the own terminal apparatus, in the individual control signals notified from the base station apparatus 500 (Step S6), and extracts the resource assignment information, MCS information, and mode information which are control information contained in the individual control signal addressed to the own station.

In the case where the mode information indicates a mode in which multiuser-MIMO transmission containing other-user modulation information is performed, the control information extraction section 405 further extracts the stream number information, the pilot sequence information (PSI = Mt associated with the stream number information), and the other-user modulation information. In the case where the mode information indicates a mode in which multiuser-MIMO transmission not containing other-user modulation information is performed, the control information extraction section 405 further extracts the stream number information and the pilot sequence information (Step S7).

The terminal apparatus 400 performs the following operation by using the individual control which is addressed to the own station, and which is extracted by the control information extraction section 405. In the case where the mode information indicates a mode in which multiuser-MIMO transmission containing other-user modulation information is performed, the apparatus performs the following operation. In other cases, the MLD reception operation is not performed, and an MMSE reception is performed.

Based on the channel estimation result H, the pilot sequence information PSI with respect to the spatial stream addressed to the own station, the modulation information contained in the MCS information, and the other-user modulation information, the MLD reception process section 409 performs the following MLD reception processes (1) to (3).

(1) In the case were two-antenna transmission is performed, the MLD reception process section 409 converts the other-user modulation information that is the indexes (other-user modulation information indexes) which are represented by bits, into modulation information of spatial streams, by using the other-user modulation information conversion table.

In the case where transmission is performed by four or more antennas, from indexes (indexes in which spatial stream number information and other-user modulation information are combined with each other) which are represented by bits, the MLD reception process section 409 converts the spatial stream number information and the other-user modulation information, into spatial stream number information (here, further associated with the pilot sequence information, PSI = Mt) and modulation information of spatial streams, by using a conversion table of indexes in which spatial stream number information and other-user modulation information are combined with each other.

In the case where the PSI of the spatial stream addressed to the own station is s-th information, the modulation information obtained in the above-described MLD reception process (1) contains modulation information in the ascending sequence with respect to the PSI excluding the s-th information. Namely, in the case of Mt = 4, and in the case where the own station stream is PSI = 4, the information is modulation information of spatial streams transmitted as other-user modulation information together with PSI = 1, PSI = 2, and PSI = 3.

(2) A transmission signal candidate Sm is generated from the pilot sequence information PSI, the MCS information, and the modulation information of the spatial stream obtained from the other-user modulation information. Here, the transmission signal candidate is an Mt-dimensional vector, and an element Dk which is a k-th element of the vector is configured by a modulation symbol candidate of the spatial stream which is transmitted together with PSI = k where k is a natural number from 1 to Mt.

(3) The MLD reception process section 409 generates a replica of the reception signal from the channel estimation value H of the MIMO propagation channel, and the transmission signal candidate Sm, and decides a signal candidate Smax which minimizes the Euclidian distance with a reception signal r, as the transmission signal. From the transmission signal Smax which is decided based on the maximum likelihood estimation rule, an m-th element Dm corresponding to PSI = m of the stream addressed to the own station is set as a symbol determination value of the spatial stream of the own station. Alternatively, a technique of obtaining the likelihood value (soft determination value) for each bit by using a predetermined metric may be applied to the transmission signal Smax which is decided based on the maximum likelihood estimation rule. In this case, the bit likelihood value (soft determination value) with respect to the m-th element Dm corresponding to PSI = m of the stream addressed to the own station is the symbol soft determination value of the spatial stream of the own station.

As described above, the MLD reception process section 409 estimates symbol determination values of all spatial streams based on the maximum likelihood estimation rule, and calculates their likelihood information. Then, the section outputs only the likelihood information with respect to the stream addressed to the own station.

The decoding section 411 performs an error correction decoding process by using the coding rate information of an error correction code which is contained in the MCS information with respect to the spatial stream addressed to the own station, and the output of the MLD reception process section (Step S10).

According to the base station apparatus 500 in the Related Example, in the case where the output value PSI of the pilot sequence information generation section 127 indicating the pilot sequence number PSI with respect to the spatial stream of the own station is a predetermined value L (PSI = L), the other-user modulation information generation section 529 outputs other-user modulation information based on the output of the stream modulation information extraction section 109. Therefore, only a specific terminal apparatus 400 which is allocated in multiuser-MIMO transmission can perform MLD reception. When the pilot sequence number PSI used in the spatial stream with respect to the specific terminal apparatus 400 is previously decided, an explicit notification of PSI information is not necessary, the overhead of notifications of other-user modulation information can be reduced.

According to the terminal apparatus 400 in the Related Example, moreover, the possibility that terminal apparatuses which support MLD reception are a part of sophisticated terminals is high, and hence the allocation of the pilot sequence number (PSI) of the notification of other-user modulation information may be changed based on MLD reception support information (class information or Capability information of a terminal) in a terminal apparatus. Therefore, only a part of terminals which are allocated in MU-MIMO (terminals which support MLD reception) perform the notification of other-user modulation information, and the notification of other-user modulation information is not performed on terminals which do not support MLD reception, whereby the overhead can be reduced without causing substantial reduction of the reception performance.

In the embodiment, the operation which has been described in Embodiment 1 may be applied to the other-user modulation information generation section 529. Namely, the pilot sequence allocation section 511 decides allocation of pilot sequences that are transmitted while being contained in the spatial multiplexing streams to all the terminal apparatuses MS#1 to #S which perform multiuser-MIMO transmission, based on modulation information of spatial multiplexing streams (the number PSI (Pilot stream index) of a pilot sequence is decided). Here, S indicates the spatial multiplexing number (spatial multiplexing user number). It is assumed that, in the case of the spatial multiplexing number S, the pilot sequence number (PSI $\leq$ S) which is a natural number that is equal to or smaller than S is used.

As association (constraint) between modulation information and PSI allocation, other-user modulation information which is started from consistency of modulation information of the own station (described in Variation 2) is added. Therefore, the PSI number can be arbitrarily allocated irrespective of modulation information of the own station.

In the case where the output value PSI of the pilot sequence information generation section 127 indicating the pilot sequence number PSI with respect to the spatial stream of the own station is a predetermined value L (PSI = L), the other-user modulation information generation section 529 outputs other-user modulation information based on the output of the stream modulation information extraction section. Here, other-user modulation information is generated in the form which is used in Embodiment 1.

Fig. 18 shows other Example 2 of the antenna individual control information which is generated by the individual control signal generation section 533 in the case where the number of the transmission antennas is 4 or more (the spatial multiplexing number Mt is 4 or less). However, the resource assignment information, the MCS information, and the individual ID information are omitted.

In (A) MIMO mode information (MEF) shown in Fig. 18, in addition to a conventional MU-MIMO mode (a mode which does not contain other-user modulation information), an MU-MIMO mode (0b11) which contains other-user modulation level information is added.

The case of (B) the MU-MIMO mode (0b11) which is shown in Fig. 18, and which contains other-user modulation level information occurs in the case where the output value PSI of the pilot sequence information generation section 127 indicating the pilot sequence number PSI with respect to the spatial stream of the own station is the predetermined value L = Mt (PSI = Mt). Therefore, the necessity of explicitly transmitting PSI information is eliminated. Consequently, bit representation which contains the spatial multiplexing number Mt information and other-user modulation information is used. In this case, candidates of the spatial multiplexing number are in 3 states or Mt = 2, 3, or 4, and hence 2 bits are required in the case where the spatial multiplexing number Mt is singly sent. When a bit representation containing other-user modulation information is used, however, a required bit number can be reduced by using the following bit representation. Here, $m_k$ indicates the bit state of 0 or 1.

In the case of Mt = 4, as shown in Fig. 18, the bit representation (Mt, PSI) containing the spatial multiplexing number Mt information and other-user modulation information is $0b1m_1m_2m_3m_4$. The arrangement of $(m_1m_2m_3m_4)$ is a bit representation showing other-user modulation information for the other 3 station users.

In the case of Mt = 3, as shown in Fig. 18, the bit representation (Mt, PSI) containing the spatial multiplexing number Mt informtaion and other-user modulation information is $0b01m_1m_2m_3$. The arrangement of $(m_1m_2m_3)$ is a bit representation showing other-user modulation information for the other 2 station users.

In the case of Mt = 2, as shown in Fig. 18, the bit representation (Mt, PSI) containing the spatial multiplexing number Mt information and other-user modulation information is 0b00$m_1m_2$. The arrangement of ($m_1m_2$) is a bit representation showing other-user modulation information for the other 1 station user.

As described above, in the case of the MU-MIMO mode (0b11) containing other-user modulation level information, PSI and an Mt-bit allocation areas which are used in a conventional MU-MIMO mode can be used as other-user modulation information. By contrast, in the case of a conventional MU-MIMO mode (0b10) which does not contain other-user modulation information, the pilot sequence number PSI and the spatial multiplexing number Mt are notified by a required bit number. Here, Nt indicates the number of transmission antennas. It is assumed that this has been notified by other DL control information. In addition to the effects of the Related Example, when the configurations and operations of the pilot sequence allocation section 111 and other-user modulation information generation section 129 which have been described in Embodiment 1 are applied, therefore, the required bit number of notifications of other-user modulation information can be further reduced.

Typically, the functional blocks which are used in the descriptions of the embodiment and Related Example are realized in the form of an LSI which is an integrated circuit. They may be individually integrated in one chip, or part or all of them may be integrated in one chip. Although such an integrated circuit is referred to as an LSI, such an integrated circuit may be called an IC, a system LSI, a super LSI, or an ultra LSI depending on the degree of integration.

The method of realizing such an integrated circuit is not limited to an LSI, and the integrated circuit may be realized by a dedicated circuit or a general-purpose processor. Alternatively, it is also possible to use an FPGA (Field Programmable Gate Array) which can be programmed after the generation of the LSI, or a reconfigurable processor in which the connections or settings of circuit cells in the LSI can be reconfigured.

Furthermore, with the advancement of semiconductor technologies or other technologies derived therefrom, when integrated circuit technologies which replace LSIs emerge, it is a matter of course that the functional blocks may be integrated using such technologies. The applications of biotechnologies, and the like are possible.

Although the invention has been described in detail and with reference to the specific embodiment and Related Example, it is obvious to those skilled in the art that various changes and modifications can be made without departing from the scope of the invention.

Industrial Applicability

The wireless communication device and wireless communication method of the invention have the effect that the overhead of notifications of other-user modulation information contained in individual control information in a multiuser-MIMO mode can be reduced, and are useful as a wireless communication device and the like.

Reference Signs List

100, 300, 500 base station apparatus
101 antenna
103 reception section
105 feedback information extracting means
107 terminal apparatus allocating means
109 stream modulation information extraction section
111, 511 pilot sequence allocation section
120, 320, 520 individual control signal and individual data signal generation section
121 resource assignment information generation section
123 mode information/stream number information generation section
125 individual ID information generation section
127 pilot sequence information generation section
129, 529 other-user modulation information generation section
131 MCS information generation section
133, 533 individual control signal generation section
135 encoding/modulation section
137 individual pilot addition section
139 precoding control section
141 beam formation section
151 OFDMA frame formation section
153 IFFT section
155 transmission section
157 all-user modulation information generation section
159 coding rate information generation section
513 spatial multiplexing user number information extraction section
200, 400 terminal apparatus
201 reception antenna
203 reception section
205, 405 control information extraction section
207 channel estimation section
209, 409 MLD reception process section
211, 411 decoding section
213 precoding weight selection/reception quality estimation section
215 feedback information generation section
217 transmission section
219 transmission antenna

Claims

1. A wireless communication device (100) for performing communication with a number of communication counterpart devices by multiuser-MIMO transmission, the wireless communication device comprising:

an individual control signal generation section (133) which is configured, for a first communication counterpart device of said communication counterpart devices, to generate individual control information including a pilot stream index, PSI, for said first communication counterpart device, a number of streams Mt in the multiuser-MIMO transmission being equal to the number of said communication counterpart devices, and an indication of a combination of modulation schemes of second communication counterpart devices, said second communication counterpart devices being said number of said communication counterpart devices besides the first communication counterpart device; and

a transmission section (155) which is configured to transmit the generated individual control information to the first communication counterpart device,

wherein the individual control signal generation section is further configured to allocate pilot stream indexes of the number of communication counterpart devices in ascending or descending order of a modulation multi-level number of the modulation schemes of the communication counterpart devices, each pilot stream index being a number equal to or smaller than the number of streams,

and wherein

for said first communication counterpart device, said combination of modulation schemes of said second communication counterpart devices is indicated by arranging these schemes in ascending or descending order of a modulation multi-level number and using an index of the arrangement as said indication of said combination, the said index being represented by bits and

for said first communication counterpart device, said arrangement of the modulation schemes of said second communication counterpart devices belongs to a set of possible different arrangements formed by varying each of Mt-1 modulation schemes to take each of a number of values L of modulation multi-level number and ordering the Mt-1 schemes according to the modulation multi-level number.

2. The wireless communication according to claim 1, wherein the number of streams Mt in the multiuser-MIMO transmission equals 4, the number of values L of modulation multi-level number equals 3, and thereby a number of the possible different arrangements in said set is 10, requiring four bits for each said indication of the arrangement.

3. A wireless communication device according to claim 1, wherein said arrangement of the modulation schemes of the communication counterpart devices besides said each device belongs to a set of possible different arrangements formed by varying each of Mt-1 modulation schemes to take each of a number of values L of modulation multi-level number and ordering the Mt-1 schemes according to the modulation multi-level number, with exclusion of arrangements in which a number of the modulation schemes corresponding to a first predetermined modulation multi-level number is equal to or larger than a predetermined number, wherein the first predetermined modulation multi-level number is a maximum modulation multi-level number allowed in the multiuser-MIMO transmission.

4. A wireless communication device according to claim 1, wherein said arrangement of the modulation schemes of the communication counterpart devices besides said each device belongs to a set of possible different arrangements formed by varying each of Mt-1 modulation schemes to take each of a number of values L of modulation multi-level number and ordering the Mt-1 schemes according to the modulation multi-level number, with exclusion of arrangements in which a number of the modulation schemes corresponding to a second predetermined modulation multi-level number is equal to or larger than a predetermined number, wherein the second predetermined modulation multi-level number is a minumum modulation multi-level number allowed in the multiuser-MIMO transmission.

5. The wireless communication device according to claim 3 or 4, wherein the number of streams Mt in the multiuser-MIMO transmission equals 4, the number of values L of modulation multi-level number equals 3, the number of the possible different arrangements in said set is 8, and the number of arrangements in said set without said exclusion is 10.

6. A wireless communication method in a wireless communication device for performing communication with a number of communication counterpart devices by multiuser-MIMO transmission, the wireless communication method comprising:

for a first communication counterpart device of said communication counterpart devices, generating individual control information including a pilot stream index, PSI, for said first communication counterpart, a number of streams Mt in the multiuser-MIMO transmission being equal to the number of said communication counterpart devices, and an indication of a combination of modulation schemes of second communication counterpart devices, said second communication counterpart devices being said number of said communication counterpart devices besides the first communication counterpart device ; and

transmitting the generated individual control information to the first communication counterpart device,

wherein said generating includes allocating pilot stream indexes of the number of communication counterpart devices in ascending or descending order of a modulation multi-level number of the modulation schemes of the communication counterpart devices, each pilot stream index being a number equal to or smaller than the number of streams, and wherein

for said first communication counterpart device, said combination of modulation schemes of said second communication counterpart devices is indicated by arranging these schemes in ascending or descending order of a modulation multi-level number and using an index of the arrangement as said indication of said combination, the said index being represented by bits and

for said first communication counterpart device, said arrangement of the modulation schemes of said second communication counterpart devices belongs to a set of possible different arrangements formed by varying each of Mt-1 modulation schemes to take each of a number of values L of modulation multi-level number and ordering the Mt-1 schemes according to the modulation multi-level number.

7. The wireless communication method of claim 6, wherein the number of streams Mt in the multiuser-MIMO transmission equals 4, the number of values L of modulation multi-level number equals 3, and thereby a number of the possible different arrangements in said set is 10, requiring four bits for each said indication of the arrangement.

8. A wireless communication method according to claim 6, wherein said arrangement of the modulation schemes of the communication counterpart devices besides said each device belongs to a set of possible different arrangements formed by varying each of Mt-1 modulation schemes to take each of a number of values L of modulation multi-level number and ordering the Mt-1 schemes according to the modulation multi-level number, with exclusion of arrangements in which a number of the modulation schemes corresponding to a first predetermined modulation multi-level number is equal to or larger than a predetermined number, wherein the first predetermined modulation multi-level number is a maximum modulation multi-level number allowed in the multiuser-MIMO transmission.

9. A wireless communication method according to claim 6, wherein said arrangement of the modulation schemes of the communication counterpart devices besides said each device belongs to a set of possible different arrangements formed by varying each of Mt-1 modulation schemes to take each of a number of values L of modulation multi-level number and ordering the Mt-1 schemes according to the modulation multi-level number, with exclusion of arrangements in which a number of the modulation schemes corresponding to a second predetermined modulation multi-level number is equal to or larger than a predetermined number, wherein the second predetermined modulation multi-level number is a minumum modulation multi-level number allowed in the multiuser-MIMO transmission.

10. The wireless communication method according to claim 8 or 9, wherein the number of streams Mt in the multiuser-MIMO transmission equals 4, the number of values L of modulation multi-level number equals 3, the number of the possible different arrangements in said set is 8, and the number of arrangements in said set without said exclusion is 10.

**Patentansprüche**

1. Drahtlose Kommunikationsvorrichtung (100) zum Durchführen von Kommunikation mit einer Anzahl von Gegenkommunikationsvorrichtungen durch Mehrbenutzer-MIMO-Übertragung, wobei die drahtlose Kommunikationsvorrichtung umfasst:

einen Erzeugungsabschnitt (133) für ein einzelnes Steuersignal, der dazu konfiguriert ist, für eine erste Gegenkommunikationsvorrichtung aus den Gegenkommunikationsvorrichtungen individuelle Steuerinformationen zu erzeugen, die einen Pilotdatenstromindex, PSI, für die erste Gegenkommunikationsvorrichtung enthalten, wobei eine Anzahl von Datenströmen Mt in der Mehrbenutzer-MIMO-Übertragung gleich der Anzahl der Gegenkommunikationsvorrichtungen ist, und eine Anzeige einer Kombination aus Modulationsschemata von zweiten Gegenkommunikationsvorrichtungen, wobei die zweiten Gegenkommunikationsvorrichtungen die Anzahl von Gegenkommunikationsvorrichtungen neben der ersten Gegenkommunikationsvorrichtung sind; und einen Sendeabschnitt (155), der dazu konfiguriert ist, die erzeugten individuellen Steuerinformationen an die erste Gegenkommunikationsvorrichtung zu senden,
wobei der Erzeugungsabschnitt für ein einzelnes Steuersignal des Weiteren dazu konfiguriert ist, Pilotdatenstromindices der Anzahl von Gegenkommunikationsvorrichtungen in aufsteigender oder absteigender Reihenfolge einer Mehrebenenmodulationszahl der Modulationsschemata der Gegenkommunikationsvorrichtungen zuzuweisen, wobei jeder Pilotdatenstromindex eine Anzahl gleich oder kleiner als die Anzahl der Datenströme ist,
und wobei
für die erste Gegenkommunikationsvorrichtung die Kombination aus Modulationsschemata der zweiten Gegenkommunikationsvorrichtungen durch Anordnen dieser Schemata in aufsteigender oder absteigender Reihenfolge einer Mehrebenenmodulationszahl angezeigt wird, und durch Verwenden eines Indexes der Anordnung als die Anzeige dieser Kombination, wobei der Index durch Bits repräsentiert ist, und
für die erste Gegenkommunikationsvorrichtung die Anordnung der Modulationsschemata der zweiten Gegenkommunikationsvorrichtungen zu einem Satz aus möglichen anderen Anordnungen gehört, die durch Variieren der einzelnen Mt-1 Modulationsschemata gebildet werden, um jeden einer Anzahl von Werten L der Mehrebenenmodulationszahl zu nehmen, und durch Sortieren der Mt-1 Schemata entsprechend der Mehrebenenmodulationszahl.

2. Drahtlose Kommunikation nach Anspruch 1, wobei die Anzahl der Datenströme Mt in der Mehrbenutzer-MIMO-Übertragung gleich 4 ist, die Anzahl der Werte L der Mehrebenenmodulationszahl gleich 3 ist und dadurch eine Anzahl der möglichen anderen Anordnungen in diesem Satz 10 ist, wobei vier Bits für jede Anzeige der Anordnung benötigt werden.

3. Drahtlose Kommunikationsvorrichtung nach Anspruch 1, wobei
die Anordnung der Modulationsschemata der Gegenkommunikationsvorrichtungen neben jeder Vorrichtung zu einem Satz aus möglichen anderen Anordnungen gehört, die durch Variieren von jedem von Mt-1 Modulationsschemata gebildet werden, um jeden einer Anzahl von Werten L der Mehrebenenmodulationszahl zu nehmen, und durch Ordnen der Mt-1 Schemata entsprechend der Mehrebenenmodulationszahl, mit Ausnahme von Anordnungen, in welchen eine Anzahl der Modulationsschemata entsprechend einer ersten vorgegebenen Mehrebenenmodulationszahl gleich oder größer als eine vorgegebene Anzahl ist, wobei die erste vorgegebene Mehrebenenmodulationszahl eine maximale Mehrebenenmodulationszahl ist, die in der Mehrbenutzer-MIMO-Übertragung zulässig ist.

4. Drahtlose Kommunikationsvorrichtung nach Anspruch 1, wobei
die Anordnung der Modulationsschemata der Gegenkommunikationsvorrichtungen neben jeder Vorrichtung zu einem Satz aus möglichen anderen Anordnungen gehört, die durch Variieren von jedem von Mt-1 Modulationsschemata gebildet werden, um jeden einer Anzahl von Werten L der Mehrebenenmodulationszahl zu nehmen, und durch Ordnen der Mt-1 Schemata entsprechend der Mehrebenenmodulationszahl, mit Ausnahme von Anordnungen, in welchen eine Anzahl der Modulationsschemata entsprechend einer zweiten vorgegebenen Mehrebenenmodulationszahl gleich oder größer als eine vorgegebene Anzahl ist, wobei die zweite vorgegebene Mehrebenenmodulationszahl eine Mindest-Mehrebenenmodulationszahl ist, die in der Mehrbenutzer-MIMO-Übertragung zulässig ist.

5. Drahtlose Kommunikationsvorrichtung nach Anspruch 3 oder 4, wobei die Anzahl der Datenströme Mt in der Mehrbenutzer-MIMO-Übertragung gleich 4 ist, die Anzahl der Werte L der Mehrebenenmodulationszahl gleich 3 ist, die Anzahl der möglichen anderen Anordnungen in diesem Satz 8 ist, und die Anzahl von Anordnungen in dem Satz ohne die Ausnahme 10 ist.

6. Drahtloses Kommunikationsverfahren in einer drahtlosen Kommunikationsvorrichtung zum Durchführen von Kommunikation mit einer Anzahl von Gegenkommunikationsvorrichtungen durch Mehrbenutzer-MIMO-Übertragung, wobei das drahtlose Kommunikationsverfahren umfasst:

für eine erste Gegenkommunikationsvorrichtung aus den Gegenkommunikationsvorrichtungen, Erzeugen von individuellen Steuerinformationen, die einen Pilotdatenstromindex, PSI, für die erste Gegenkommunikationsvorrichtung enthalten, wobei eine Anzahl von Datenströmen Mt in der Mehrbenutzer-MIMO-Übertragung gleich der Anzahl der Gegenkommunikationsvorrichtungen ist, und eine Anzeige einer Kombination aus Modulationsschemata von zweiten Gegenkommunikationsvorrichtungen, wobei die zweiten Gegenkommunikationsvorrichtungen die Anzahl von Gegenkommunikationsvorrichtungen neben der ersten Gegenkommunikationsvorrichtung sind; und
Senden der erzeugten individuellen Steuerinformationen an die erste Gegenkommunikationsvorrichtung,
wobei das Erzeugen das Zuweisen von Pilotdatenstromindices der Anzahl von Gegenkommunikationsvorrichtungen in aufsteigender oder absteigender Reihenfolge einer Mehrebenenmodulationszahl der Modulationsschemata der Gegenkommunikationsvorrichtungen beinhaltet, wobei jeder Pilotdatenstromindex eine Anzahl gleich oder kleiner als die Anzahl der Datenströme ist, und wobei

für die erste Gegenkommunikationsvorrichtung die Kombination aus Modulationsschemata der zweiten Gegenkommunikationsvorrichtungen durch Anordnen dieser Schemata in aufsteigender oder absteigender Reihenfolge einer Mehrebenenmodulationszahl angezeigt wird, und durch Verwenden eines Index der Anordnung als die Anzeige dieser Kombination, wobei der Index durch Bits repräsentiert ist, und

für die erste Gegenkommunikationsvorrichtung die Anordnung der Modulationsschemata der zweiten Gegenkommunikationsvorrichtungen zu einem Satz aus möglichen anderen Anordnungen gehört, die durch Variieren der einzelnen Mt-1 Modulationsschemata gebildet werden, um jeden einer Anzahl von Werten L der Mehrebenenmodulationszahl zu nehmen und die Mt-1 Schemata entsprechend der Mehrebenenmodulationszahl zu sortieren.

**7.** Drahtloses Kommunikationsverfahren nach Anspruch 6, wobei die Anzahl der Datenströme Mt in der Mehrbenutzer-MIMO-Übertragung gleich 4 ist, die Anzahl der Werte L der Mehrebenenmodulationszahl gleich 3 ist und dadurch eine Anzahl der möglichen anderen Anordnungen in diesem Satz 10 ist, wobei vier Bits für jede Anzeige der Anordnung benötigt werden.

**8.** Drahtloses Kommunikationsverfahren nach Anspruch 6, wobei
die Anordnung der Modulationsschemata der Gegenkommunikationsvorrichtungen neben jeder Vorrichtung zu einem Satz aus möglichen anderen Anordnungen gehört, die durch Variieren von jedem von Mt-1 Modulationsschemata gebildet werden, um jeden einer Anzahl von Werten L der Mehrebenenmodulationszahl zu nehmen, und durch Ordnen der Mt-1 Schemata entsprechend der Mehrebenenmodulationszahl, mit Ausnahme von Anordnungen, in welchen eine Anzahl der Modulationsschemata entsprechend einer ersten vorgegebenen Mehrebenenmodulationszahl gleich oder größer als eine vorgegebene Anzahl ist, wobei die erste vorgegebene Mehrebenenmodulationszahl eine maximale Mehrebenenmodulationszahl ist, die in der Mehrbenutzer-MIMO-Übertragung zulässig ist.

**9.** Drahtloses Kommunikationsverfahren nach Anspruch 6, wobei
die Anordnung der Modulationsschemata der Gegenkommunikationsvorrichtungen neben jeder Vorrichtung zu einem Satz aus möglichen anderen Anordnungen gehört, die durch Variieren von jedem von Mt-1 Modulationsschemata gebildet werden, um jeden einer Anzahl von Werten L der Mehrebenenmodulationszahl zu nehmen, und durch Ordnen der Mt-1 Schemata entsprechend der Mehrebenenmodulationszahl, mit Ausnahme von Anordnungen, in welchen eine Anzahl der Modulationsschemata entsprechend einer zweiten vorgegebenen Mehrebenenmodulationszahl gleich oder größer als eine vorgegebene Anzahl ist, wobei die zweite vorgegebene Mehrebenenmodulationszahl eine Mindest-Mehrebenenmodulationszahl ist, die in der Mehrbenutzer-MIMO-Übertragung zulässig ist.

**10.** Drahtloses Kommunikationsverfahren nach Anspruch 8 oder 9, wobei die Anzahl der Datenströme Mt in der Mehrbenutzer-MIMO-Übertragung gleich 4 ist, die Anzahl der Werte L der Mehrebenenmodulationszahl gleich 3 ist, die Anzahl der möglichen anderen Anordnungen in diesem Satz 8 ist, und die Anzahl von Anordnungen in dem Satz ohne die Ausnahme 10 ist.

## Revendications

**1.** Dispositif de communication sans fil (100) permettant de communiquer avec un nombre de dispositifs partenaires de communication par transmission MIMO multi-utilisateurs, le dispositif de communication sans fil comprenant :

une section de génération de signaux de commande individuels (133) qui est conçue, pour un premier dispositif partenaire de communication desdits dispositifs partenaires de communication, pour générer une information de commande individuelle incluant un indice de flux pilote, soit PSI (*pilot stream index*), pour ledit premier dispositif partenaire de communication, un nombre de flux Mt dans la transmission MIMO multi-utilisateurs étant égal au nombre desdits dispositifs partenaires de communication, et une indication d'une combinaison de schémas de modulation de seconds dispositifs partenaires de communication, lesdits seconds dispositifs partenaires de communication étant ledit nombre desdits dispositifs partenaires de communication sauf le premier dispositif partenaire de communication ; et
une section de transmission (155) qui est conçue pour transmettre l'information de commande individuelle générée au premier dispositif partenaire de communication,
dans lequel la section de génération de signaux de commande individuels est en outre configurée pour allouer des indices de flux pilote du nombre de dispositifs partenaires de communication dans l'ordre croissant ou décroissant d'un nombre de multi-niveaux de modulation des schémas de modulation des dispositifs partenaires de communication, chaque indice de flux pilote étant un nombre égal ou inférieur au nombre de flux,

et dans lequel,

pour ledit premier dispositif partenaire de communication, ladite combinaison de schémas de modulation desdits seconds dispositifs partenaires de communication est indiquée en disposant ces schémas dans l'ordre croissant ou décroissant d'un nombre de multi-niveaux de modulation et en utilisant un indice de cette disposition en tant qu'indication de ladite combinaison, ledit indice étant représenté par des éléments binaires et,

pour ledit premier dispositif partenaire de communication, ladite disposition des schémas de modulation desdits seconds dispositifs partenaires de communication appartient à un ensemble de différentes dispositions possibles formées en faisant varier chaque schéma de Mt-1 schémas de modulation pour qu'il prenne chacune d'un nombre de valeurs L du nombre de multi-niveaux de modulation et en ordonnant les Mt-1 schémas selon le nombre de multi-niveaux de modulation.

2. Communication sans fil selon la revendication 1, dans laquelle le nombre de flux Mt dans la transmission MIMO multi-utilisateurs est égal à 4, le nombre de valeurs L du nombre de multi-niveaux de modulation est égal à 3 et, ainsi, un nombre des différentes dispositions possibles dans ledit ensemble est égal à 10, nécessitant quatre éléments binaires pour chaque dite indication de la disposition.

3. Dispositif de communication sans fil selon la revendication 1, dans lequel
ladite disposition des schémas de modulation des dispositifs partenaires de communication sauf ledit chaque dispositif appartient à un ensemble de différentes dispositions possibles formées en faisant varier chaque schéma de Mt-1 schémas de modulation pour qu'il prenne chacune d'un nombre de valeurs L du nombre de multi-niveaux de modulation et en ordonnant les Mt-1 schémas selon le nombre de multi-niveaux de modulation, à l'exclusion de dispositions dans lesquelles un nombre des schémas de modulation correspondant à un premier nombre de multi-niveaux de modulation prédéterminé est supérieur ou égal à un nombre prédéterminé, dans lequel le premier nombre de multi-niveaux de modulation prédéterminé est un nombre de multi-niveaux de modulation maximum autorisé dans la transmission MIMO multi-utilisateurs.

4. Dispositif de communication sans fil selon la revendication 1, dans lequel
ladite disposition des schémas de modulation des dispositifs partenaires de communication sauf ledit chaque dispositif appartient à un ensemble de différentes dispositions possibles formées en faisant varier chaque schéma de Mt-1 schémas de modulation pour qu'il prenne chacune d'un nombre de valeurs L du nombre de multi-niveaux de modulation et en ordonnant les Mt-1 schémas selon le nombre de multi-niveaux de modulation, à l'exclusion de dispositions dans lesquelles un nombre des schémas de modulation correspondant à un second nombre de multi-niveaux de modulation prédéterminé est supérieur ou égal à un nombre prédéterminé, dans lequel le second nombre de multi-niveaux de modulation prédéterminé est un nombre de multi-niveaux de modulation minimum autorisé dans la transmission MIMO multi-utilisateurs.

5. Dispositif de communication sans fil selon la revendication 3 ou 4, dans lequel le nombre de flux Mt dans la transmission MIMO multi-utilisateurs est égal à 4, le nombre de valeurs L du nombre de multi-niveaux de modulation est égal à 3, le nombre des différentes dispositions possibles dans ledit ensemble est égal à 8 et le nombres de dispositions dans ledit ensemble sans ladite exclusion est égal à 10.

6. Procédé de communication sans fil dans un dispositif de communication sans fil permettant de communiquer avec un nombre de dispositifs partenaires de communication par transmission MIMO multi-utilisateurs, le procédé de communication sans fil consistant à :

pour un premier dispositif partenaire de communication desdits dispositifs partenaires de communication, générer une information de commande individuelle incluant un indice de flux pilote, PSI, pour ledit premier partenaire de communication, un nombre de flux Mt dans la transmission MIMO multi-utilisateurs étant égal au nombre desdits dispositifs partenaires de communication, et une indication d'une combinaison de schémas de modulation de seconds dispositifs partenaires de communication, lesdits seconds dispositifs partenaires de communication étant ledit nombre desdits dispositifs partenaires de communication sauf le premier dispositif partenaire de communication ; et

transmettre l'information de commande individuelle générée au premier dispositif partenaire de communication,

dans lequel ladite génération comprend l'allocation d'indices de flux pilote du nombre de dispositifs partenaires de communication dans l'ordre croissant ou décroissant d'un nombre de multi-niveaux de modulation des schémas de modulation des dispositifs partenaires de communication, chaque indice de flux pilote étant un nombre égal ou inférieur au nombre de flux, et dans lequel,

pour ledit premier dispositif partenaire de communication, ladite combinaison de schémas de modulation desdits seconds dispositifs partenaires de communication est indiquée en disposant ces schémas dans l'ordre croissant ou décroissant d'un nombre de multi-niveaux de modulation et en utilisant un indice de cette disposition en tant que ladite indication de ladite combinaison, ledit indice étant représenté par des éléments binaires et,

pour ledit premier dispositif partenaire de communication, ladite disposition des schémas de modulation desdits seconds dispositifs partenaires de communication appartient à un ensemble de différentes dispositions possibles formées en faisant varier chaque schéma de Mt-1 schémas de modulation pour qu'il prenne chacune d'un nombre de valeurs L du nombre de multi-niveaux de modulation et en ordonnant les Mt-1 schémas selon le nombre de multi-niveaux de modulation.

7. Procédé de communication sans fil selon la revendication 6, dans lequel le nombre de flux Mt dans la transmission MIMO multi-utilisateurs est égal à 4, le nombre de valeurs L du nombre de multi-niveaux de modulation est égal à 3 et, ainsi, un nombre des différentes dispositions possibles dans ledit ensemble est égal à 10, nécessitant quatre éléments binaires pour chaque dite indication de la disposition.

8. Procédé de communication sans fil selon la revendication 6, dans lequel
ladite disposition des schémas de modulation des dispositifs partenaires de communication sauf ledit chaque dispositif appartient à un ensemble de différentes dispositions possibles formées en faisant varier chaque schéma de Mt-1 schémas de modulation pour qu'il prenne chacune d'un nombre de valeurs L du nombre de multi-niveaux de modulation et en ordonnant les Mt-1 schémas selon le nombre de multi-niveaux de modulation, à l'exclusion de dispositions dans lesquelles un nombre des schémas de modulation correspondant à un premier nombre de multi-niveaux de modulation prédéterminé est supérieur ou égal à un nombre prédéterminé, dans lequel le premier nombre de multi-niveaux de modulation prédéterminé est un nombre de multi-niveaux de modulation maximum autorisé dans la transmission MIMO multi-utilisateurs.

9. Procédé de communication sans fil selon la revendication 6, dans lequel
ladite disposition des schémas de modulation des dispositifs partenaires de communication sauf ledit chaque dispositif appartient à un ensemble de différentes dispositions possibles formées en faisant varier chaque schéma de Mt-1 schémas de modulation pour qu'il prenne chacune d'un nombre de valeurs L du nombre de multi-niveaux de modulation et en ordonnant les Mt-1 schémas selon le nombre de multi-niveaux de modulation, à l'exclusion de dispositions dans lesquelles un nombre des schémas de modulation correspondant à un second nombre de multi-niveaux de modulation prédéterminé est supérieur ou égal à un nombre prédéterminé, dans lequel le second nombre de multi-niveaux de modulation prédéterminé est un nombre de multi-niveaux de modulation minimum autorisé dans la transmission MIMO multi-utilisateurs.

10. Procédé de communication sans fil selon la revendication 8 ou 9, dans lequel le nombre de flux Mt dans la transmission MIMO multi-utilisateurs est égal à 4, le nombre de valeurs L du nombre de multi-niveaux de modulation est égal à 3, le nombre des différentes dispositions possibles dans ledit ensemble est égal à 8 et le nombre de dispositions dans ledit ensemble sans ladite exclusion est égal à 10.

# FIG.1

EP 2 451 106 B1

# FIG.2

(a)                                    (b)

# FIG.3

| TERMINAL APPARATUS NUMBER | MODULATION INFORMATION OF TERMINAL APPARATUS | PILOT SEQUENCE ALLOCATION (PSI) |
|---|---|---|
| MS # 1 | 16QAM | 2 |
| MS # 2 | QPSK | 1 |
| MS # 3 | 64QAM | 4 |
| MS # 4 | 16QAM | 3 |

# FIG.4

Example: Case of spatial multiplexing
number Mt = 4 (number of other users is 3)

|  | Step 1 | Step 2 |
|---|---|---|
| A. All are QPSK | 0 0 0 | |
| B. Two are QPSK | 0 0 1 | 0 |
| | 0 0 1 | 1 |
| C. One is QPSK | 0 1 1 | 0 0 |
| | 0 1 1 | 0 1 |
| | 0 1 1 | 1 1 |
| D. No QPSK | 1 1 1 | 0 0 0 |
| | 1 1 1 | 0 0 1 |
| | 1 1 1 | 0 1 1 |
| | 1 1 1 | 1 1 1 |

In case of spatial multiplexing
number Mt = 4:
10 kinds ⇒ notification is
enabled by 4 bits

# FIG.5

|  | step1 | step2 | Index |
|---|---|---|---|
| A. All are QPSK | 0 0 0 | | → 0 |
| B. Two are QPSK | 0 0 1 | 0 | → 1 |
| | 0 0 1 | 1 | → 2 |
| C. One is QPSK | 0 1 1 | 0 0 | → 3 |
| | 0 1 1 | 0 1 | → 4 |
| | 0 1 1 | 1 1 | → 5 |
| D. No QPSK | 1 1 1 | 0 0 0 | → 6 |
| | 1 1 1 | 0 0 1 | → 7 |
| | 1 1 1 | 0 1 1 | → 8 |
| | 1 1 1 | 1 1 1 | → 9 |

# FIG.6

Example: Case of spatial multiplexing
number Mt = 4 (number of other users is 3)

| | step1 | step2 |
|---|---|---|
| A. All are QPSK | 0 0 0 | |
| B. Two are QPSK | 0 0 1 <br> 0 0 1 | 0 <br> 1 |
| C. One is QPSK | 0 1 1 <br> 0 1 1 <br> 0 1 1 | 0 0 <br> 0 1 <br> 1 1 |
| D. No QPSK | 1 1 1 <br> 1 1 1 <br> 1 1 1 <br> 1 1 1 | 0 0 0 <br> 0 0 1 <br> 0 1 1 <br> 1 1 1 |

In case of spatial multiplexing
number Mt = 4 (10 kinds)
Example of allocation by 4 bits

| | | | | |
|---|---|---|---|---|
| A | 0 | 0 | 0 | 0 |
| B | 0 | 0 | 1 | x |
| C | 0 | 1 | x | x |
| D | 1 | x | x | x |

# FIG.7

In case of spatial multiplexing
number Mt = 3 (6 kinds)
Example of allocation by 3 bits

| | |
|---|---|
| A. All are QPSK | 0 0 0 |
| B. One is QPSK | 0 1 x |
| C. No QPSK | 1 x x |

# FIG.8

| Syntax | Size in bits | Description/Notes |
|---|---|---|
| MEF | 2 | MIMO encoder format<br>0b00: SFBC<br>0b01: Vertical encoding<br>0b10: Horizontal encoding (MU- MIMO)<br>0b11: MU - MIMO (other-user modulation level information exists) [A] |
| If (Nt> 4 & MEF=0b11 ){ | | |
| Other-user modulation information | Variable [2-4 bits] | if Mt=4: MDF=$m_1 m_2 m_3 m_4$<br>if Mt=3: MDF=$m_1 m_2 m_3$<br>if Mt=2: MDF=$m_1 m_2$  [B] |
| }<br>if(Nt> 4 & MEF=0b10 \| 0b11){ | | |
| PSI | 2 | Allocated pilot stream index for Nt $\geq$ 4<br>0b00: #1 stream<br>0b01: #2stream<br>0b10: #3stream<br>0b11: #4stream<br>"Allocate PSI in ascending order of multi-level number of stream"<br>*PSI is equal to or smaller than spatial multiplexing number Mt (PSI ≤ Mt) |
| Mt | 2 | Number of streams in transmission for Nt $\geq$ 4 ,($M_t <= N_t$)<br>0b00: 1 stream<br>0b01: 2 streams<br>0b10: 3 streams<br>0b11: 4 streams |
| } | | |

(*Transmission antenna number Nt is notified through DL shared control ch)

EP 2 451 106 B1

# FIG.9

# FIG.10

| Process procedure of base station apparatus 100 | Process procedure of terminal apparatus 200 |

S1 — Transmit common pilot signal

Calculate channel estimation value by common pilot — S2

Select precoding weight — S3

Estimate reception quality — S4

Request transmission beam, notify reception quality
S4A

S5 — Allocation of terminal apparatuses which perform MU-MIMO transmission

Transmission of control signal
S5A

Receive control signal — S6

Extraction of other-user modulation information — S7

S8 — Transmit spatial stream (individual data signal, pilot signal)

Transmission of individual data signal
S8A

Channel estimation process — S9

Receive individual data — S10

# FIG.11

Example: Case of spatial multiplexing
number Mt = 4 (number of other users is 3)

|  | step1 | step2 |
|---|---|---|
| A. All are QPSK | 0 0 0 | |
| B. Two are QPSK | 0 0 1 | 0 |
| | 0 0 1 | 1 |
| C. One is QPSK | 0 1 1 | 0 0 |
| | 0 1 1 | 0 1 |
| | 0 1 1 | 1 1 |
| D. No QPSK | 1 1 1 | 0 0 0 |
| | 1 1 1 | 0 0 1 |
| | 1 1 1 | 0 1 1 |
| | 1 1 1 | 1 1 1 |

Two patterns are reduced (8 kinds)
→ notification is enabled by using
3 bits (reduction 50% compared
with conventional method)

# FIG.12

16QAM

B

A

QPSK   64QAM

# FIG.13

300

105 — FEEDBACK INFORMATION EXTRACTING MEANS    103 — RECEPTION SECTION

107 — TERMINAL APPARATUS ALLOCATING MEANS

#S

#1  121 — RESOURCE ASSIGNMENT INFORMATION GENERATION SECTION

133 — INDIVIDUAL CONTROL SIGNAL GENERATION SECTION

123 — MODE INFORMATION/STREAM NUMBER INFORMATION GENERATION SECTION

125 — INDIVIDUAL ID INFORMATION GENERATION SECTION

109 — STREAM MODULATION INFORMATION EXTRACTION SECTION

111 — PILOT SEQUENCE ALLOCATION SECTION

127 — PILOT SEQUENCE INFORMATION GENERATION SECTION

157 — ALL-USER MODULATION INFORMATION GENERATION SECTION

139 — PRECODING CONTROL SECTION

159 — CODING RATE INFORMATION GENERATION SECTION

135 — ENCODING/ MODULATION SECTION

137 — INDIVIDUAL PILOT ADDITION SECTION

141 — BEAM FORMATION SECTION

151 — OFDMA FRAME FORMATION SECTION

153 — IFFT SECTION    155 — TRANS-MISSION SECTION

101

101

153    155

153 — IFFT SECTION    155 — TRANS-MISSION SECTION

101

INDIVIDUAL CONTROL SIGNAL AND INDIVIDUAL DATA SIGNAL GENERATION SECTION 320

EP 2 451 106 B1

35

FIG.14

# FIG.15

| Syntax | Size in bits | Description/Notes |
|---|---|---|
| <u>MEF</u> | <u>2</u> | <u>MIMO encoder format</u><br><u>0b00: SFBC</u><br><u>0b01: Vertical encoding</u><br>0b10: Horizontal encoding (MU−MIMO)<br>0b11:MU−MIMO (other-user modulation level information exists |

A

| | | |
|---|---|---|
| If (Nt=2 & MEF=0b11 ){ | | |
| Other-user modulation information | 2 | 0b00: QPSK,<br>0b01:16QAM<br>0b10´64QAM |

B

| | | |
|---|---|---|
| } else if(Nt=2&MEF=0b10){ | | |
| PSI | 1 | Allocated pilot stream index for Nt=2<br>0b0: #1 stream<br>0b1:#2 stream |
| Mt | 1 | Number of streams in transmission for Nt=2<br>( $M_t <= N_t$ )<br>0b00: 1 stream<br>0b01: 2 streams |
| } | | |

(*Transmission antenna number Nt is notified
through DL shared control ch)

EP 2 451 106 B1

# FIG.16

| Syntax | Size in bits | Description/Notes | |
|---|---|---|---|
| MEF | 2 | MIMO encoder format<br>0b00: SFBC<br>0b01: Vertical encoding<br>0b10: Horizontal encoding (MU–MIMO)<br>0b11: MU – MIMO (other-user modulation level information exists | ◄ A |
| If (Nt >4 & MEF=0b11){ | | | |
| Joint coding of PSI, other-user modulation information, UML | Variable<br>[4–7 bits] | 0b1$m_1m_2m_3m_4m_5m_6$:(PSI, Mt)=(4,4), UML=$m_1m_2m_3m_4m_5m_6$<br>0b01$m_1m_2m_3m_4$ :(PSI, Mt)=(3,3), UML=$m_1m_2m_3m_4$<br>0b00$m_1m_2$ :(PSI, Mt)=(2,2), UML=$m_1m_2$ | ◄ B |
| } else if(Nt >4 &MEF=0b10){ | | | |
| PSI | 2 | Allocated pilot stream index for Nt ≧ 4<br>0b00: #1 stream<br>0b01: #2stream<br>0b10: #3stream<br>0b11: #4stream | |
| Mt | 2 | Number of streams in transmission for Nt ≧ 4 ,($M_t <= N_t$)<br>0b00: 1 stream<br>0b01: 2 streams<br>0b10: 3 streams<br>0b11: 4 streams | (*Transmission antenna number Nt is notified through DL shared control ch) |
| } | | | |

# FIG.17

# FIG.18

| Syntax | Size in bits | Description/Notes |
|---|---|---|
| MEF | 2 | <u>MIMO encoder format</u><br>0b00: SFBC<br>0b01: Vertical encoding<br><u>0b10: Horizontal encoding (MU−MIMO)</u><br><u>0b11: MU−MIMO</u> ( other-user modulation level information exists ◄— A |
| If (Nt >4 & MEF=0b11){ | | |
| Joint coding of PSI, other-user modulation information, UML | <u>Variable</u><br>[4−5 bits] | $0b\,1m_1m_2m_3m_4m_5m_6$:(PSI, Mt)=(4,4), UML=$m_1m_2m_3m_4$<br>$0b01m_1m_2m_3m_4$ :(PSI, Mt)=(3,3), UML=$m_1m_2m_3$<br>$0b00m_1m_2$ :(PSI, Mt)=(2,2), UML=$m_1m_2$  ◄— B |
| } else if(Nt >4 &MEF=0b10){ | | |
| PSI | 2 | Allocated pilot stream index for Nt $\geq$ 4<br>0b00: #1 stream<br>0b01:#2 stream<br>0b10:#3 stream<br>0b11:#4 stream |
| Mt | 2 | <u>Number of streams in transmission for Nt $\geq$ 4 ,($M_t <= N_t$)</u><br>0b00: 1 stream<br>0b01: 2 streams<br>0b10: 3 streams<br>0b11: 4 streams |
| } | | |

(*Transmission antenna number Nt is notified through DL shared control ch)

EP 2 451 106 B1

# FIG.19

| A-MAP | A-MAP | A-MAP | A-MAP | | | | |
|---|---|---|---|---|---|---|---|
| DL SF0 | DL SF1 | DL SF2 | DL SF3 | UL SF4 | UL SF5 | UL SF6 | UL SF7 |

# FIG.20

Individual control information with respect to MS#n (major ones are extracted)

•Resource allocation information: RA#n [containing position (start, end), allocation size, and distributed/concentrated arrangement]

•MCS information: MCS#n [4 bits]

•MIMO mode information: MEF [2 bits]
(In case of MU-MIMO mode, following 2 pieces of information are contained)

•Pilot sequence information: PSI#n [1bit(if Nt=2), 2bits(if Nt=4 or 8)]

•Spatial multiplexing stream number: Mt [1bit(if Nt=2), 2bits(if Nt=4 or 8)]

•Terminal destination information: MCRC#n [CRC masked by station ID]

Nt: Transmission antenna number (notified through other shared control channel)

MCRC: CRC masked by own station ID. Terminal uses MCRC to sense individual control information addressed to own station together with error detection.

FIG.21

# FIG.22

| BIT ALLOCATION WITH RESPECT TO MODULATION METHOD | MODULATION METHOD OF OTHER USERS |
|---|---|
| 0b00 | QPSK |
| 0b01 | 16QAM |
| 0b10 | 64QAM |
| 0b11 | N/A |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. J. FOSCHINI.** Layered space-time architecture for wireless communication in a fading environment when using multi-element antennas. *Bell Labs Tech. J,* 1996, 41-59
- *3GPP TS36.211 V8.3.0,* May 2008
- Air Interface for Fixed and Mobile Broadband Wireless Access Systems: Advanced Air Interface (working document). *IEEE 802.16m-09/0010r2*
- Tokkyocho Hyoujun Gijutsushu. MIMO Kanren Gijutsu
- **AMIR KHOJASTEPOUR ; NARAYAN PRASAD ; SAMPATH RANGARAJAN ; NADER ZEIN ; TETSU IKEDA ; ANDREAS MAEDER.** Text proposal on DL MAP. *IEEE C802.16m-09/1017,* 27 April 2009